# EUROPEAN PATENT APPLICATION

(11) **EP 4 716 282 A1**
(43) Date of publication of application: **25.03.2026**
(21) Application number: 24806498.2
(22) Date of filing: 11.05.2024
(51) Int. Cl.: H04W 24/04

(54) **INFORMATION TRANSMISSION METHOD AND APPARATUS, AND RECEIVING DEVICE, CORE NETWORK NODE AND SENDING DEVICE**

(30) Priority: 15.05.2023 CN 202310544270
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); XIAO, Guojun, Beijing 100085 (CN)
(74) Representative: Studio Torta S.p.A.
(86) International application number: PCT/CN2024/092547
(87) International publication number: WO 2024/235146

(57) **Abstract**

Provided in the present disclosure are an information transmission method and apparatus, a reception device, a core network node, and a transmission device. The method is executed by a reception device, and comprises: measuring a positioning reference signal from a transmission device according to a first phase error group (PEG) corresponding to the reception device, so as to acquire first information; and sending the first information to a core network node, wherein the first information comprises a phase measurement and/or a difference between phase delays.

## Description

### CROSS-REFERENCE TO RELATED APPLICATION

The present disclosure claims priority to the Chinese Patent Application No. 202310544270.8, filed on May 15, 2023, with the application title "Information Transmission Method, Apparatus, Receiving Device, Core Network Node, and Transmission device", entire contents of which are incorporated herein by reference.

### TECHNICAL FIELD

The present disclosure relates to the field of communication technologies, and in particular, to an information transmission method and apparatus, a reception device, a core network node, and a transmission device.

### BACKGROUND

The related art focuses on discussing a 5th generation (5G) New Radio (NR) Carrier Phase Positioning (CPP) technical solution. How to eliminate or reduce the impact of phase delay (i.e., phase error) of different transmit (Tx)/receive (Rx) transmission channels of a base station/user equipment (UE, which may also be referred to as a terminal) on NR CPP is an urgent problem to be resolved.

### SUMMARY

Embodiments of the present disclosure provide an information transmission method and apparatus, a reception device, a core network node, and a transmission device, to achieve the purpose of eliminating or reducing the impact of phase delay of different Tx/Rx transmission channels of a base station/UE on NR CPP.

To resolve the foregoing technical problem, an embodiment of the present disclosure provides an information transmission method performed by a reception device. The method includes: obtaining first information through measuring, according to a first phase error group (PEG) corresponding to the reception device, a positioning reference signal from a transmission device; and sending the first information to a core network node; wherein the first information includes a phase measurement and/or a difference between phase delays.

In some embodiments, when the first information includes the phase measurement, obtaining the first information through measuring the positioning reference signal from the transmission device by the first PEG corresponding to the reception device includes at least one of the following: obtaining, by using different first PEGs to measure positioning reference signals corresponding to a same second PEG from the transmission device, phase measurements respectively corresponding to the different first PEGs; and obtaining, by using a same first PEG to measure positioning reference signals respectively corresponding to different second PEGs from the transmission device, phase measurements respectively corresponding to the different second PEGs; the second PEG corresponds to the transmission device.

In some embodiments, when the first information includes the difference between phase delays, obtaining the first information through measuring the positioning reference signal from the transmission device by the first PEG corresponding to the reception device includes at least one of the following: obtaining, by using different first PEGs to measure positioning reference signals corresponding to a same second PEG from the transmission device, a difference between phase delays of the different first PEGs; and obtaining, by using a same first PEG to measure positioning reference signals respectively corresponding to different second PEGs from the transmission device, a difference between phase delays of the different second PEGs; the second PEG corresponds to the transmission device.

In some embodiments, when the first information includes a phase measurement, the method further includes: reporting a first association relationship, wherein the first association relationship is used to indicate a correspondence between the first PEG and the phase measurement.

In some embodiments, the method further includes: receiving first request information from a core network node, wherein the first request information is used to request the reception device to obtain the first information.

In some embodiments, the method further includes: receiving a second association relationship from a core network node, wherein the second association relationship is used to indicate a correspondence between an identifier of a second PEG corresponding to the transmission device and a positioning reference signal.

In some embodiments, the first PEG and a first timing error group (TEG) are associated with a same phase measurement; and/or the second PEG and a second TEG are associated with a same positioning reference signal; the first TEG includes at least one of the following: a reception TEG, a reception-transmission TEG; and the second TEG includes at least one of the following: a transmission TEG, a reception-transmission TEG.

In some embodiments, the first PEG corresponding to the reception device includes at least one of the following: a reception PEG, a reception-transmission PEG.

In some embodiments, the reception PEG satisfies at least one of the following: the reception PEG is associated with at least one phase measurement; a reception phase error contained in the reception PEG is within a first range, and the reception phase error corresponds to a phase measurement; the reception phase error includes: an uncalibrated phase error or a remaining phase error after calibration of a reception radio frequency chain and/or an uncalibrated phase error or a remaining phase error after calibration of a reception antenna; an uncalibrated phase center offset or a remaining phase center offset after calibration from a reception antenna Phase Center (APC) to a physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; a transmission phase error contained in the transmission PEG is within a second range, and the transmission phase error corresponds to a positioning reference signal; the transmission phase error includes: an uncalibrated phase error or a remaining phase error after calibration of a transmission radio frequency chain and/or an uncalibrated phase error or a remaining phase error after calibration of a transmission antenna; an uncalibrated phase center offset or a remaining phase center offset after calibration from a transmit APC to a physical antenna reference point (ARP).

In some embodiments, the reception-transmission PEG satisfies at least one of the following: the reception-transmission PEG is associated with at least one phase measurement and at least one positioning reference signal; a sum of a reception phase error and a transmission phase error contained in the reception-transmission PEG is within a third range, wherein the reception phase error corresponds to the phase measurement, and the transmission phase error corresponds to the positioning reference signal.

In some embodiments, when the reception device is a terminal, the positioning reference signal is a downlink positioning reference signal (PRS) for positioning; when the reception device is a network device, the positioning reference signal is an uplink sounding reference signal for positioning (SRS-Pos).

An embodiment of the present disclosure further provides an information transmission method performed by a core network node. The method includes: receiving first information from a reception device, wherein the first information is obtained by the reception device through measuring a positioning reference signal from a transmission device according to a first phase error group (PEG) corresponding to the reception device; the first information includes a phase measurement and/or a difference between phase delays.

In some embodiments, the phase measurement includes at least one of the following: phase measurements respectively corresponding to different first PEGs; phase measurements respectively corresponding to different second PEGs, wherein the second PEG corresponds to the transmission device.

In some embodiments, the difference between phase delays includes at least one of the following: a difference between phase delays of different first PEGs; a difference between phase delays of different second PEGs, wherein the second PEG corresponds to the transmission device.

In some embodiments, when the first information includes the phase measurement, the method further includes: receiving a first association relationship from the reception device, wherein the first association relationship is used to indicate a correspondence between the first PEG and the phase measurement.

In some embodiments, the method further includes: sending first request information to the reception device, wherein the first request information is used to request the reception device to obtain the first information.

In some embodiments, the method further includes: receiving a second association relationship from the transmission device, wherein the second association relationship is used to indicate a correspondence between the identifier of the second PEG and the positioning reference signal; and sending the second association relationship to the reception device; the second PEG corresponds to the transmission device.

In some embodiments, the method further includes: sending second request information to the transmission device, wherein the second request information is used to request the acquisition of a correspondence between the identifier of the second PEG and the positioning reference signal.

In some embodiments, the method further includes: correcting, according to the first information, a difference between phase delays of phase measurements corresponding to different first PEGs and/or different second PEGs; performing terminal position calculation based on the corrected phase measurement.

In some embodiments, the first PEG includes at least one of the following: a reception PEG, a reception-transmission PEG.

In some embodiments, the reception PEG satisfies at least one of the following: the reception PEG is associated with at least one phase measurement; a reception phase error contained in the reception PEG is within a first range, and the reception phase error corresponds to a phase measurement; the reception phase error includes: an uncalibrated phase error or a remaining phase error after calibration of a reception radio frequency chain and/or an uncalibrated phase error or a remaining phase error after calibration of a reception antenna; an uncalibrated phase center offset or a remaining phase center offset after calibration from a reception antenna Phase Center (APC) to a physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; a transmission phase error contained in the transmission PEG is within a second range, and the transmission phase error corresponds to a positioning reference signal; the transmission phase error includes: an uncalibrated phase error or a remaining phase error after calibration of a transmission radio frequency chain and/or an uncalibrated phase error or a remaining phase error after calibration of a transmission antenna; an uncalibrated phase center offset or a remaining phase center offset after calibration from a transmit APC to a physical antenna reference point (ARP).

In some embodiments, the reception-transmission PEG satisfies at least one of the following: the reception-transmission PEG is associated with at least one phase measurement and at least one positioning reference signal; a sum of a reception phase error and a transmission phase error contained in the reception-transmission PEG is within a third range, wherein the reception phase error corresponds to the phase measurement, and the transmission phase error corresponds to the positioning reference signal.

In some embodiments, when the reception device is a terminal, the positioning reference signal is a downlink positioning reference signal (PRS) for positioning; when the reception device is a network device, the positioning reference signal is an uplink sounding reference signal for positioning (SRS-Pos).

An embodiment of the present disclosure further provides an information transmission method performed by a transmission device. The method includes: sending a second association relationship to a core network node, wherein the second association relationship is used to indicate a correspondence between the identifier of a second phase error group (PEG) and a positioning reference signal, and the second PEG corresponds to the transmission device.

In some embodiments, the method further includes: sending the positioning reference signal to the reception device.

An embodiment of the present disclosure further provides a reception device, including a memory, a transceiver, and a processor: the memory is configured to store a computer program; the transceiver is configured to send and receive data under the control of the processor; and the processor is configured to read the computer program in the memory and perform the following operations: obtaining first information through measuring, according to a first phase error group (PEG) corresponding to the reception device, a positioning reference signal from a transmission device; and sending the first information to a core network node through the transceiver; the first information includes a phase measurement and/or a difference between phase delays.

In some embodiments, when the first information includes a phase measurement, the processor is configured to read the computer program in the memory and perform at least one of the following operations: obtaining, by using different first PEGs to measure positioning reference signals corresponding to a same second PEG from the transmission device, phase measurements respectively corresponding to the different first PEGs; and obtaining, by using a same first PEG to measure positioning reference signals respectively corresponding to different second PEGs from the transmission device, phase measurements respectively corresponding to the different second PEGs; wherein the second PEG corresponds to the transmission device.

In some embodiments, when the first information includes a difference between phase delays, the processor is configured to read the computer program in the memory and perform at least one of the following operations: obtaining, by using different first PEGs to measure positioning reference signals corresponding to a same second PEG from the transmission device, a difference between phase delays of the different first PEGs; and obtaining, by using a same first PEG to measure positioning reference signals respectively corresponding to different second PEGs from the transmission device, a difference between phase delays of the different second PEGs; the second PEG corresponds to the transmission device.

In some embodiments, when the first information includes a phase measurement, the processor is configured to read the computer program in the memory and further perform the following operation: reporting a first association relationship, wherein the first association relationship is used to indicate a correspondence between the first PEG and the phase measurement.

In some embodiments, the processor is configured to read the computer program in the memory and further perform the following operation: receiving, by using the transceiver, first request information from a core network node, wherein the first request information is used to request the reception device to obtain the first information.

In some embodiments, the processor is configured to read the computer program in the memory and further perform the following operation: receiving, by using the transceiver, a second association relationship from a core network node, wherein the second association relationship is used to indicate a correspondence between an identifier of a second PEG (corresponding to the transmission device) and a positioning reference signal.

In some embodiments, the first PEG and a first timing error group (TEG) are associated with a same phase measurement; and/or the second PEG and a second TEG are associated with a same positioning reference signal; the first TEG includes at least one of the following: a reception TEG, a reception-transmission TEG; and the second TEG includes at least one of the following: a transmission TEG, a reception-transmission TEG.

In some embodiments, the first PEG corresponding to the reception device includes at least one of the following: a reception PEG, a reception-transmission PEG.

In some embodiments, the reception PEG satisfies at least one of the following: the reception PEG is associated with at least one phase measurement; a reception phase error contained in the reception PEG is within a first range, and the reception phase error corresponds to a phase measurement; the reception phase error includes: an uncalibrated phase error or a remaining phase error after calibration of a reception radio frequency chain and/or an uncalibrated phase error or a remaining phase error after calibration of a reception antenna; an uncalibrated phase center offset or a remaining phase center offset after calibration from a reception antenna Phase Center (APC) to a physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; a transmission phase error contained in the transmission PEG is within a second range, and the transmission phase error corresponds to a positioning reference signal; the transmission phase error includes: an uncalibrated phase error or a remaining phase error after calibration of a transmission radio frequency chain and/or an uncalibrated phase error or a remaining phase error after calibration of a transmission antenna; an uncalibrated phase center offset or a remaining phase center offset after calibration from a transmit APC to a physical antenna reference point (ARP).

In some embodiments, the reception-transmission PEG satisfies at least one of the following: the reception-transmission PEG is associated with at least one phase measurement and at least one positioning reference signal; a sum of a reception phase error and a transmission phase error contained in the reception-transmission PEG is within a third range, wherein the reception phase error corresponds to the phase measurement, and the transmission phase error corresponds to the positioning reference signal.

In some embodiments, when the reception device is a terminal, the positioning reference signal is a downlink positioning reference signal (PRS) for positioning; when the reception device is a network device, the positioning reference signal is an uplink sounding reference signal for positioning (SRS-Pos).

An embodiment of the present disclosure further provides a core network node, including a memory, a transceiver, and a processor; the memory is configured to store a computer program; the transceiver is configured to send and receive data under the control of the processor; and the processor is configured to read the computer program in the memory and perform the following operations: receiving, by using the transceiver, first information from a reception device, wherein the first information is obtained by the reception device through measuring a positioning reference signal from a transmission device according to a first phase error group (PEG) corresponding to the reception device; the first information includes a phase measurement and/or a difference between phase delays.

In some embodiments, the phase measurement includes at least one of the following: phase measurements respectively corresponding to different first PEGs; phase measurements respectively corresponding to different second PEGs, wherein the second PEG corresponds to the transmission device.

In some embodiments, the difference between phase delays includes at least one of the following: a difference between phase delays of different first PEGs; a difference between phase delays of different second PEGs, wherein the second PEG corresponds to the transmission device.

In some embodiments, when the first information includes the phase measurement, the processor is further configured to read the computer program in the memory and perform the following operation: receiving a first association relationship from the reception device, wherein the first association relationship is used to indicate a correspondence between the first PEG and the phase measurement.

In some embodiments, the processor is configured to read the computer program in the memory and further perform the following operation: sending first request information to the reception device, wherein the first request information is used to request the reception device to obtain the first information.

In some embodiments, the processor is configured to read the computer program in the memory and further perform the following operations: receiving a second association relationship from the transmission device, wherein the second association relationship is used to indicate a correspondence between the identifier of the second PEG and the positioning reference signal; and sending the second association relationship to the reception device; the second PEG corresponds to the transmission device.

In some embodiments, the processor is configured to read the computer program in the memory and further perform the following operation: sending second request information to the transmission device, wherein the second request information is used to request the acquisition of a correspondence between the identifier of the second PEG and the positioning reference signal.

In some embodiments, the processor is configured to read the computer program in the memory and further perform the following operations: correcting, according to the first information, a difference between phase delays of phase measurements corresponding to different first PEGs and/or different second PEGs; performing terminal position calculation based on the corrected phase measurement.

In some embodiments, the first PEG includes at least one of the following: a reception PEG, a reception-transmission PEG.

In some embodiments, the reception PEG satisfies at least one of the following: the reception PEG is associated with at least one phase measurement; a reception phase error contained in the reception PEG is within a first range, and the reception phase error corresponds to a phase measurement; the reception phase error includes: an uncalibrated phase error or a remaining phase error after calibration of a reception radio frequency chain and/or an uncalibrated phase error or a remaining phase error after calibration of a reception antenna; an uncalibrated phase center offset or a remaining phase center offset after calibration from a reception antenna Phase Center (APC) to a physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; a transmission phase error contained in the transmission PEG is within a second range, and the transmission phase error corresponds to a positioning reference signal; the transmission phase error includes: an uncalibrated phase error or a remaining phase error after calibration of a transmission radio frequency chain and/or an uncalibrated phase error or a remaining phase error after calibration of a transmission antenna; an uncalibrated phase center offset or a remaining phase center offset after calibration from a transmit APC to a physical antenna reference point (ARP).

In some embodiments, the reception-transmission PEG satisfies at least one of the following: the reception-transmission PEG is associated with at least one phase measurement and at least one positioning reference signal; a sum of a reception phase error and a transmission phase error contained in the reception-transmission PEG is within a third range, wherein the reception phase error corresponds to the phase measurement, and the transmission phase error corresponds to the positioning reference signal.

In some embodiments, when the reception device is a terminal, the positioning reference signal is a downlink positioning reference signal (PRS) for positioning; when the reception device is a network device, the positioning reference signal is an uplink sounding reference signal for positioning (SRS-Pos).

An embodiment of the present disclosure further provides a transmission device, including a memory, a transceiver, and a processor; the memory is configured to store a computer program; the transceiver is configured to send and receive data under the control of the processor; and the processor is configured to read the computer program in the memory and perform the following operation: sending a second association relationship to a core network node, wherein the second association relationship is used to indicate a correspondence between the identifier of a second phase error group (PEG) and a positioning reference signal, and the second PEG corresponds to the transmission device.

In some embodiments, the processor is configured to read the computer program in the memory and further perform the following operation: sending the positioning reference signal to the reception device through the transceiver.

An embodiment of the present disclosure further provides an information transmission apparatus, applied to a reception device. The apparatus includes: a first obtaining unit, configured to measure, according to a first phase error group (PEG) corresponding to the reception device, a positioning reference signal from a transmission device, to obtain first information; and a first sending unit, configured to send the first information to a core network node; the first information includes a phase measurement and/or a difference between phase delays.

An embodiment of the present disclosure further provides an information transmission apparatus, applied to a core network node. The apparatus includes: a first receiving unit, configured to receive first information from a reception device, wherein the first information is obtained by the reception device through measuring a positioning reference signal from a transmission device according to a first phase error group (PEG) corresponding to the reception device; the first information includes a phase measurement and/or a difference between phase delays.

An embodiment of the present disclosure further provides an information transmission apparatus, applied to a transmission device. The apparatus includes: a second sending unit, configured to send a second association relationship to a core network node, wherein the second association relationship is used to indicate a correspondence between the identifier of a second phase error group (PEG) and a positioning reference signal, and the second PEG corresponds to the transmission device.

An embodiment of the present disclosure further provides a processor-readable storage medium, wherein the processor-readable storage medium stores a computer program, and the computer program is configured to cause the processor to perform the foregoing method.

The beneficial effects of the present disclosure are as follows:
according to the foregoing solution, the phase measurement and/or the difference between phase delays are obtained by measuring the positioning reference signal from the transmission device according to the first PEG corresponding to the reception device, and the phase measurement and/or the difference between phase delays are sent to the core network node, so as to assist the core network node in adjusting the phase measurement, thereby improving the accuracy of terminal position calculation.

### BRIEF DESCRIPTION OF THE DRAWINGS

To more clearly illustrate the technical solutions in the embodiments of the present disclosure or the related art, the following briefly introduces the accompanying drawings required for describing the embodiments or the related art. Apparently, the accompanying drawings in the following description are merely some embodiments described in the present disclosure, and those of ordinary skill in the art may still derive other drawings from these accompanying drawings without creative efforts.
FIG. 1 is a structural diagram of a network system applicable to an embodiment of the present disclosure;
FIG. 2 is a first schematic flowchart of an information transmission method according to an embodiment of the present disclosure;
FIG. 3 is a second schematic flowchart of an information transmission method according to an embodiment of the present disclosure;
FIG. 4 is a third schematic flowchart of an information transmission method according to an embodiment of the present disclosure;
FIG. 5 is a first schematic diagram of units of an information transmission apparatus according to an embodiment of the present disclosure;
FIG. 6 is a first structural diagram of a reception device according to an embodiment of the present disclosure;
FIG. 7 is a second structural diagram of a reception device according to an embodiment of the present disclosure;
FIG. 8 is a second schematic diagram of units of an information transmission apparatus according to an embodiment of the present disclosure;
FIG. 9 is a third schematic diagram of units of an information transmission apparatus according to an embodiment of the present disclosure.

### DETAILED DESCRIPTION

The technical solutions in the embodiments of the present disclosure will be clearly and completely described below with reference to the accompanying drawings in the embodiments of the present disclosure. Apparently, the described embodiments are some rather than all of the embodiments of the present disclosure. All other embodiments obtained by a person of ordinary skill in the art based on the embodiments of the present disclosure without creative efforts shall fall within the protection scope of the present disclosure.

The terms "first", "second", and the like in the specification and claims of the present disclosure are used to distinguish similar objects, and are not necessarily used to describe a specific order or sequence. It should be understood that the terms used in this way may be interchanged under appropriate circumstances, so that the embodiments of the present disclosure described herein, for example, are implemented in an order other than those illustrated or described herein. In addition, the terms "include" and "have" and any variations thereof are intended to cover non-exclusive inclusion, for example, a process, method, system, product, or device that includes a series of steps or units is not necessarily limited to those steps or units clearly listed, but may include other steps or units that are not clearly listed or inherent to these processes, methods, products, or devices.

In the embodiments of the present disclosure, the term "and/or" describes an association relationship between associated objects, indicating that there may be three relationships, for example, A and/or B may indicate that A exists alone, both A and B exist, and B exists alone. The character "/" generally indicates an "or" relationship between associated objects. In the embodiments of the present disclosure, the term "a plurality of" means two or more, and other quantifiers are similar thereto.

In the embodiments of the present disclosure, words such as "exemplary" or "for example" are used to represent examples, illustrations, or descriptions. Any embodiment or design scheme described as "exemplary" or "for example" in the embodiments of the present disclosure should not be construed as preferred or advantageous over other embodiments or designs. Exactly, use of words such as "exemplary" or "for example" is intended to present a related concept in a specific manner.

The following first briefly describes the related concepts involved in the present disclosure.

### 1. a definition of a Transmission/Reception Timing Error Group (Tx/Rx TEG)

In wireless communication positioning, the timing error for transmitting the positioning reference signal and the timing error for receiving the positioning reference signal all directly affect the time measurement value and the accuracy of the positioning solution. A transmitter (user equipment (UE) or a transmission reception point (TRP)) may have a plurality of radio frequency (RF) transmit chains (Tx chain). The transmitter may transmit the positioning reference signal using a different RF Tx chain. Each RF Tx chain may have the same or different time delay errors (or transmission timing errors). Likewise, one receiver (UE or TRP) may have multiple RF receive chains (Rx chain). The receiver may receive positioning reference signals using different RF receive chains. Each Rx RF chain may have the same or different transmission timing error.

Definitions of a transmission timing error and a reception timing error are given below, respectively.

Tx timing error: From the perspective of signal transmission, the time from generating the digital signal by the baseband to transmitting the RF signal by the Tx antenna will have a time delay. To support positioning, a UE/TRP may implement internal calibration/compensation for a Tx time delay for transmission of a downlink (DL) positioning reference signal (PRS)/uplink (UL) channel sounding reference signal (SRS), where the calibration may also include calibration/compensation for a relative time delay between different RF chains in the same TRP/UE. Calibration cannot ideally eliminate all errors. The remaining Tx time delay after calibration or uncalibrated Tx delay is defined as the Tx timing error.

Rx timing error: From the perspective of signal reception, the time when the RF signal arrives the Rx antenna and the time when the signal is digitized at the baseband and when the time stamp is capped all will have the time delay. To support positioning, the UE/TRP may implement internal calibration/compensation of the Rx time delay prior to reporting measurements obtained from the DL PRS/UL SRS signal, which may also include calibration/compensation for relative time delays between different RF chains in the same TRP/UE. Calibration cannot ideally eliminate all errors. The Rx time delay after calibration or the uncalibrated Rx delay after calibration is defined as the Rx timing error.

To improve the new radio (NR) positioning accuracy, the 3rd Generation Partnership Project (3GPP) defines the following reception timing error group (Rx TEG) and transmission timing error group (Tx TEG):

The UE Rx Timing Error Group (UE Rx TEG): one UE Rx TEG is associated with one or more UE positioning measurements; and the reception timing error of the UE positioning measurement in the same UE Rx TEG must be within the same range.

TRP Rx timing error group (TRP Rx TEG): one TRP Rx TEG is associated with one or more TRP positioning measurements; and the reception timing error of the positioning measurement in the same TRP Rx TEG must be within the same range.

The Tx TEG is used to measure a transmission timing error value, and is associated with one or more transmitted positioning reference signal resources. A difference between transmission timing errors between any pair of positioning reference signal resources belonging to the same Tx TEG is within a certain range. For the uplink, the UE Tx TEG corresponds to an uplink sounding reference signal for positioning (SRS-Pos); and for a downlink, the TRP Tx TEG corresponds to a downlink PRS.

### 2. measurement reporting of a TRP Rx TEG/UE Tx TEG for an uplink time difference of arrival (Uplink Time Difference of Arrival, UL-TDOA)

For the UL-TDOA positioning method, in order to eliminate the transmission/reception timing error, if the TRP has a plurality of TRP Rx TEGs, when the TRP reports a relative time of arrival (RTOA) measurement to a location management function (LMF), the TRP may provide association information between the RTOA measurement and the TRP Rx TEG to the LMF, and the UE provides association information between the UL SRS-Pos resource and the UE Tx TEG to the LMF.

The current protocol supports the LMF to request the TRP. In some embodiments, the TRP measures the same positioning reference signal (SRS) resource from the UE by using M different TRP Rx TEGs, and reports a corresponding plurality of RTOA measurements.

M = [2, 3, 4, 6, 8] is applicable to all configured SRS resources for positioning.

If M is not explicitly included in the request, the TRP determines the number of different TRP Rx TEGs to measure the same SRS-Pos resource; and the time stamps of the multiple RTOA measurements in the same measurement report may be the same or different.

### 3. measurement reporting of UE Tx/Rx/RxTx TEG or/TRP Tx/Rx/RxTx TEG for Multiple Cell Round-Trip Time (Multi-RTT)

The following scheme is adopted for Multi-RTT to eliminate the transmission and reception timing errors:
1) for UE transmission and reception time difference measurements, the UE may support either or both of the following options:
   Option 1: the UE reports the UE RxTx TEG ID to the LMF, or reports the UE Tx TEG ID;
   Option 2: the UE reports the UE Rx TEG ID and the UE Tx TEG ID to the LMF;
2) for the gNB transmission/reception time difference measurements, the gNB may support either of the following options or support at the same time the following two options:
   Option 1: the gNB reports the TRP RxTx TEG ID to the LMF, or reports the TRP Tx TEG ID;
   Option 2: the gNB reports the TRP Rx TEG ID and the TRP Tx TEG ID to the LMF.
3) according to the UE capability, in some embodiments, the LMF is supported to request the UE to measure the same TRP PRS resource by using N different UE Rx TEGs, and report a corresponding plurality of UE Rx Tx time difference measurements, where N = [2, 3, 4, 6, 8]. The maximum value of N depends on the UE capability and applies to all DL PRS positioning frequency layers. Note that if N is not explicitly included in the request, the UE determines, based on the capability range of the UE, the number of different UE Rx TEGs, and measures the same DL PRS resource. The timestamps of the plurality of UE Rx-Tx time difference measurements in the same measurement report may be the same or different.
4) in some embodiments, it is supported that the LMF request to the TRP to measure the same SRS resource by using the M different TRP Rx TEGs, and reports the corresponding plurality of gNB Rx-Tx time difference measurements. where M = [2, 3, 4, 6, 8] is applicable to all configured SRS resources. Note that if the LMF does not explicitly include the M value in the request sent to the TRP, the TRP itself determines the number of different TRP Rx TEGs that measure the same SRS resource. The timestamps of the plurality of gNB Rx-Tx time difference measurements in the same measurement report may be the same or different.

How to eliminate or reduce the impact of the phase delay of different Tx/Rx transmission channels of the base station/UE on the NR CPP is not currently solved. If the phase delay of different Tx/Rx transmission channels of the base station/UE is not correctly defined and eliminated, uplink CPP positioning and uplink and downlink joint CPP positioning cannot be completed, or more TRP measurements to obtain the uplink positioning reference signal of the target UE are needed to complete positioning.

Embodiments of the present disclosure are described below with reference to the accompanying drawings. The information transmission method and apparatus, the reception device, the core network node, and the transmission device provided in the embodiments of the present disclosure may be applied to a wireless communication system. The wireless communication system may be a system using a 5th generation (5G) mobile communication technology (hereinafter referred to as a 5G system for short), and a person skilled in the art may understand that the 5G NR system is only an example, and is not a limitation.

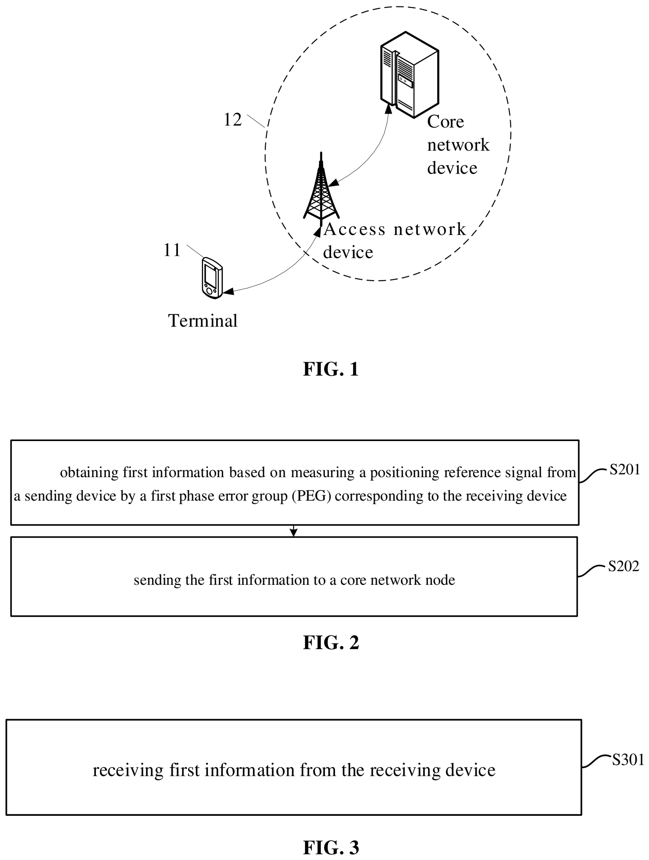

FIG. 1 is a block diagram of a wireless communication system to which an embodiment of the present disclosure may be applied. The wireless communication system includes a terminal 11 and a network-side device 12. The terminal 11 may be a mobile phone, a tablet computer, a laptop computer, a notebook computer, a personal digital assistant (PDA), a palmtop computer, a netbook, an ultra-mobile personal computer (UMPC), a mobile Internet device (MID), an augmented reality (AR)/virtual reality (VR) device, a robot, a wearable device, a vehicle user equipment (VUE), a pedestrian terminal (PUE), a smart home device (a home device with a wireless communication function, such as a refrigerator, a television, a washing machine, or furniture), a game console, a personal computer (PC), an automatic teller machine, a self-service machine, a sensing service terminal, various sensors, a smart camera, and other terminal-side devices. The wearable device includes a smart watch, a smart wristband, a smart headset, a smart glasses, smart jewelry (a smart bracelet, a smart ring, a smart necklace, a smart anklet, etc.), a smart waistband, smart clothing, and the like. It should be noted that the specific type of the terminal 11 is not limited in the embodiments of the present disclosure. The network-side device 12 may include an access network device or a core network device. The access network device may also be referred to as a radio access network device, a radio access network (RAN), a radio access network function, or a radio access network unit. The access network device may include a base station, a wireless local area network (WLAN) access point, a WiFi node, and the like. The base station may be referred to as a Node B, an evolved Node B (eNB), an access point, a base transceiver station (BTS), a radio base station, a radio transceiver, a Basic Service Set (BSS), an Extended Service Set (ESS), a Home Node B, a Home eNodeB, a Transmission Reception Point (TRP), a sensing signal transmission device, a sensing information receiving device, or other appropriate terms in the field. The core network device may include, but is not limited to, at least one of the following: a core network node, a core network function, a Mobility Management Entity (MME), an Access and Mobility Management Function (AMF), a Session Management Function (SMF), a User Plane Function (UPF), a Policy Control Function (PCF), a Policy and Charging Rules Function (PCRF), an Edge Application Server Discovery Function (EASDF), a Unified Data Management (UDM), a Unified Data Repository (UDR), a Home Subscriber Server (HSS), a Centralized Network Configuration (CNC), a Network Repository Function (NRF), a Network Exposure Function (NEF), a Local NEF (L-NEF), a Binding Support Function (BSF), an Application Function (AF), a Sensing Function (SF), and the like.

Embodiments of the present disclosure provide an information transmission method and apparatus, a reception device, a core network node, and a transmission device, to achieve the purpose of eliminating or reducing the impact of phase delays of different Tx/Rx transmission channels of a base station/UE on NR CPP.

The method and the apparatus are based on the same application concept. Since the method and the apparatus solve the same problem, the implementation of the apparatus and the method may be referred to each other, and details are not repeated herein.

As shown in FIG. 2, an embodiment of the present disclosure provides an information transmission method performed by a reception device, including:
step S201: obtaining first information according to measuring, by a first phase error group (PEG) corresponding to the reception device, a positioning reference signal sent from a transmission device;
step S202: sending the first information to a core network node;
the first information includes a phase measurement and/or a difference between phase delays.

It should be noted that by sending the phase measurement and/or the difference between phase delays to the core network node, the core network node can adjust the phase measurement, thereby ensuring that the calculated terminal position is more accurate.

The core network node in the embodiments of the present disclosure mainly refers to an LMF, that is, a network function entity (a network function node) configured to locate a terminal. The reception device may be a terminal or a network device, and the network device is a base station or a Transmission Reception Point (TRP). Correspondingly, when the reception device is a terminal, the transmission device is a network device; when the reception device is a network device, the transmission device is a terminal. Further, in some embodiments, when the reception device is a terminal, the positioning reference signal is a DL PRS for positioning; when the reception device is a network device, the positioning reference signal is an SRS-Pos.

It should be noted that, to smoothly implement the embodiments of the present disclosure, the embodiments of the present disclosure first need to define related concepts.

### 1. Transmission phase error (Tx Phase Error)

The transmission phase error mainly includes the following content:
A11: An uncalibrated phase error or a remaining phase error after calibration of a transmission radio frequency chain and/or an uncalibrated phase error or a remaining phase error after calibration of a transmission antenna;
A12: An uncalibrated phase center offset (PCO) or a remaining phase center offset (PCO) after calibration from the Antenna Phase Center (APC) to the Physical Antenna Reference Point (ARP).

### 2. Reception phase error (Rx Phase Error)

It should be noted that the reception phase error mainly includes the following content:
A21: An uncalibrated phase error or a remaining phase error after calibration of a reception radio frequency chain and/or an uncalibrated phase error or a remaining phase error after calibration of a reception antenna;
A22: An uncalibrated PCO or a remaining PCO after calibration from the receive APC to the Physical Measurement Reference Point (MRP).

### 3. Reception phase error Group (Rx PEG)

It should be noted that the Rx PEG refers to an Rx PEG corresponding to the reception device; for example, when the reception device is a terminal, the Rx PEG corresponding to the terminal may be referred to as a UE Rx PEG; when the reception device is a network device, the Rx PEG corresponding to the network device may be referred to as a TRP Rx PEG.

In some embodiments, the Rx PEG satisfies at least one of the following:
A31: the Rx PEG is associated with at least one phase measurement;
It should be noted that, for example, if the reception device is a TRP, the phase measurement includes an uplink reference signal carrier phase (RSCP) measurement; if the reception device is a UE, the phase measurement includes at least one of a downlink reference signal carrier phase (RSCP) measurement and a downlink reference signal carrier phase difference (RSCPD) measurement.

In some embodiments, each Rx PEG may be associated with one or more phase measurements.

A32: a reception phase error contained in the Rx PEG is within a first range, and the reception phase error corresponds to a phase measurement;
It should be noted that each Rx PEG has its own identifier (e.g., an ID or an index), and the reception phase errors of the phase measurements in the same Rx PEG must be within the same range. For example, the format of the Rx PEG is shown in Table 1. In some embodiments, the Rx PEG may be associated with one or more Rx RF chains and/or Rx antennas.

**Table 1: Format of Rx PEG**

| Rx PEG ID | Maximum Rx phase error value MAX_PE_Rx corresponding to Rx PEG (Unit: cm or wavelength λ, wherein λ = c/fc, c represents the speed of light (3.0×10⁸ m/s), and fc is the carrier frequency) |
|---|---|
| 0 | MAX_PE_Rx (0) |
| 1 | MAX_PE_Rx (1) |
| 2 | MAX_PE_Rx (2) |
| ... | ... |
| Q_Rx -1 | MAX_PE_Rx ( Q_Rx -1) |

Q_Rx represents the maximum number of Rx PEGs, and MAX_PE_Rx represents the maximum Rx PEG phase error value corresponding to the Rx PEG ID. The values of Q_Rx and {MAX_PE_Rx (0), MAX_PE_Rx (1), ..., MAX_PE_Rx (Q_Rx - 1)} are predefined by the 3GPP protocol, or may be preconfigured, or signaled, or determined through negotiation between the terminal and the network side; the signaling includes a Long Term Evolution Positioning Protocol (LPP), a Radio Resource Control (RRC), a Media Access Control Control Element (MAC-CE), or Downlink Control Information (DCI). For example, the value of MAX_PE_Rx is {1/50 wavelength, 1/30 wavelength, 1/20 wavelength, 1/10 wavelength }. For example, different UE Rx PEGs are associated with different phase measurements but may have the same MAX_PE_Rx value.

In some embodiments, the Rx PEG further includes a time rate of change of the reception phase error.

### 4. Transmission phase error Group (Tx PEG)

It should be noted that the Tx PEG refers to a Tx PEG corresponding to the transmission device; for example, when the transmission device is a terminal, the Tx PEG corresponding to the terminal may be referred to as a UE Tx PEG; when the transmission device is a network device, the Tx PEG corresponding to the network device may be referred to as a TRP Tx PEG.

In some embodiments, the Tx PEG satisfies at least one of the following:
A41: the Tx PEG is associated with at least one downlink positioning reference signal;
For example, one TRP Tx PEG is associated with one or more DL PRSs; one UE Tx PEG is associated with one or more SRS-Pos.

In some embodiments, each Tx PEG may be associated with one or more downlink positioning reference signals.

A42: a transmission phase error contained in the Tx PEG is within a second range, and the transmission phase error corresponds to a positioning reference signal;
It should be noted that each Tx PEG has its own identifier (e.g., an ID or an index), and the transmission phase errors of the positioning reference signals in the same Tx PEG must be within the same range. For example, the format of the Tx PEG is shown in Table 2. In some embodiments, the Tx PEG may also be associated with one or more Tx RF chains and/or Tx antennas.

**Table 2: Format of Tx PEG**

| Tx PEG ID | Maximum Tx phase error value MAX_PE_Tx corresponding to Tx PEG |
|---|---|
| | (Unit: cm or wavelength λ, wherein λ = c/fc, c represents the speed of light (3.0×10⁸ m/s), and fc is the carrier frequency) |
| 0 | MAX_PE_Tx (0) |
| 1 | MAX_PE_Tx (1) |
| 2 | MAX_PE_Tx (2) |
| ... | ... |
| Q_Tx -1 | MAX_PE_Tx (Q_Tx -1) |

Q_Tx represents the maximum number of Tx PEGs, and MAX_PE_Tx represents the maximum Tx PEG phase error value corresponding to the Tx PEG ID. The values of Q_Ix and {MAX_PE_Tx (0), MAX_PE_Tx (1), ..., MAX_PE_Tx (Q_Tx - 1)} are predefined by the 3GPP protocol, or may be preconfigured, or signaled, or determined through negotiation between the terminal and the network side; the signaling includes LPP, RRC, MAC-CE, or DCI. For example, the value of MAX_PE_Tx is {1/50 wavelength, 1/30 wavelength, 1/20 wavelength, 1/10 wavelength}. Different TRP Tx PEGs are associated with different DL PRS resources but may have the same MAX_PE_Tx value.

In some embodiments, the TRP Tx PEG further includes a time rate of change of the transmission phase error.

### 5. Reception-transmission phase error Group (RxTx PEG)

The RxTx PEG refers to an RxTx PEG corresponding to the reception device or the transmission device; for example, when the reception device or the transmission device is a terminal, the RxTx PEG corresponding to the terminal may be referred to as a UE RxTx PEG; when the reception device or the transmission device is a network device, the RxTx PEG corresponding to the network device may be referred to as a TRP RxTx PEG.

In some embodiments, the RxTx PEG satisfies at least one of the following:
A51: the RxTx PEG is associated with at least one phase measurement and at least one positioning reference signal;
For example, one TRP RxTx PEG is associated with one or more DL PRSs and at least one phase measurement; for example, one UE RxTx PEG is associated with one or more UL SRS-Pos and at least one phase measurement.

In some embodiments, each RxTx PEG may be associated with one or more positioning reference signals and one or more phase measurements.
A52: a sum of a reception phase error and a transmission phase error contained in the RxTx PEG is within a third range, wherein the reception phase error corresponds to a phase measurement, and the transmission phase error corresponds to a positioning reference signal;
It should be noted that each RxTx PEG has its own identifier (e.g., an ID or an index), and the sum of the transmission phase error of the positioning reference signal and the reception phase error of the positioning reference signal in the same RxTx PEG must be within the same range. For example, the format of the RxTx PEG is shown in Table 3. In some embodiments, the RxTx PEG may also be associated with one or more Tx RF chains and/or Tx antennas, and one or more Rx RF chains and/or Rx antennas.

**Table 3: Format of RxTx PEG**

| RxTx PEG ID | Maximum RxTx phase error value MAX_PE_RxTx of RxTx PEG (Unit: cm or cycle) |
|---|---|
| 0 | MAX_PE_RxTx (0) |
| 1 | MAX_PE_RxTx (1) |
| 2 | MAX_PE_RxTx (2) |
| ... | ... |
| Q_RxTx -1 | MAX_PE_RxTx (Q_RxTx-1) |

Q_RxTx represents the maximum number of RxTx PEGs, and MAX_PE_RxTx represents the maximum RxTx PEG phase error value corresponding to the RxTx PEG ID. The values of Q_RxTx and {MAX_PE_RxTx (0), MAX_PE_RxTx (1), ..., MAX_PE_RxTx (Q_RxTx - 1)} are predefined by the 3GPP protocol, or may be preconfigured, or signaled, or determined through negotiation between the terminal and the network side; the signaling includes LPP, RRC, MAC-CE, or DCI. For example, the value of MAX_PE_RxTx is {1/50, 1/20, 1/10} . For example, different UE RxTx PEGs are associated with different uplink RSCP measurements and UL SRS-Pos signal resources but may have the same MAX_PE_RxTx value; different TRP RxTx PEGs are associated with different downlink RSCP/RSCPD measurements and DL PRS signal resources but may have the same MAX_PE_RxTx value.

In some embodiments, the RxTx PEG further includes a time rate of change of the reception-transmission phase error.

The following describes specific implementations of the present disclosure.

First, it should be noted that the first PEG in the embodiments of the present disclosure includes at least one of the following: a reception PEG, a reception-transmission PEG; the second PEG includes at least one of the following: a transmission PEG, a reception-transmission PEG.

In some embodiments, when the first information includes a phase measurement, obtaining the first information through measuring the positioning reference signal from the transmission device by the first PEG corresponding to the reception device includes at least one of the following:
B 11: using different first PEGs to measure positioning reference signals corresponding to a same second PEG from the transmission device, to obtain phase measurements respectively corresponding to the different first PEGs;
It should be noted that if the reception device is a TRP, the TRP uses different TRP Rx PEGs (or TRP RxTx PEGs) to measure the same UL SRS-Pos resource sent by the same UE (associated with the same UE Tx PEG (or UE RxTx PEG)), to obtain uplink RSCP measurements associated with the different TRP Rx PEGs (or TRP RxTx PEGs).

It should be noted that if the reception device is a UE, the UE uses different UE Rx PEGs (or UE RxTx PEGs) to measure the same DL PRS resource (i.e., the same TRP Tx PEG (or TRP RxTx PEG)) sent by the same TRP, to obtain downlink RSCPD/RSCP measurements corresponding to the different UE Rx PEGs (or TRP RxTx PEGs).

B12: using a same first PEG to measure positioning reference signals respectively corresponding to different second PEGs from the transmission device, to obtain phase measurements respectively corresponding to the different second PEGs;
the second PEGs correspond to the transmission device;
It should be noted that if the reception device is a TRP, the TRP uses the same TRP Rx PEG (or TRP RxTx PEG) to measure UL SRS-Pos resources associated with different UE Tx PEGs (or UE RxTx PEGs) sent by the same UE, to obtain uplink RSCP measurements associated with the different UE Tx PEGs (or UE RxTx PEGs).

If the reception device is a UE, the UE uses the same UE Rx PEG (or UE RxTx PEG) to measure DL PRS resources sent by the same TRP and associated with different TRP Tx PEGs (or TRP RxTx PEGs), to obtain downlink RSCP measurements associated with the different TRP Tx PEGs (or TRP RxTx PEGs).

It should be noted that if the reception device obtains the phase measurement through measurement, to facilitate the core network node to determine the correspondence between the phase measurement and the first PEG, in some embodiments, the method further includes:
reporting a first association relationship, wherein the first association relationship is used to indicate a correspondence between the first PEG and the phase measurement.

For example, the first association relationship is a correspondence list between an identifier (e.g., an ID or an index) of the Rx PEG and the phase measurement.

In some embodiments, when the first information includes a difference between phase delays, obtaining the first information through measuring the positioning reference signal from the transmission device by the first PEG corresponding to the reception device includes at least one of the following:
B21: using different first PEGs to measure positioning reference signals corresponding to a same second PEG from the transmission device, to obtain a difference between phase delays of the different first PEGs;
In some embodiments, if the reception device is a TRP, the TRP uses different TRP Rx PEGs (or TRP RxTx PEGs) to measure the same UL SRS-Pos resource sent by the same UE (associated with the same UE Tx PEG (or UE RxTx PEG)), to obtain the difference between phase delays of the different TRP Rx PEGs (or TRP RxTx PEGs).

In some embodiments, if the reception device is a UE, the UE uses different UE Rx PEGs (or UE RxTx PEGs) to measure the same DL PRS resource (i.e., the same TRP Tx PEG (or TRP RxTx PEG)) sent by the same TRP, to obtain the difference between phase delays of the different UE Rx PEGs (or TRP RxTx PEGs).

B22: using a same first PEG to measure positioning reference signals respectively corresponding to different second PEGs from the transmission device, to obtain a difference between phase delays of the different second PEGs;
In some embodiments, if the reception device is a TRP, the TRP uses the same TRP Rx PEG (or TRP RxTx PEG) to measure UL SRS-Pos resources associated with different UE Tx PEGs (or UE RxTx PEGs) sent by the same UE, to obtain the difference between phase delays of the different UE Tx PEGs (or UE RxTx PEGs).

In some embodiments, if the reception device is a UE, the UE uses the same UE Rx PEG (or UE RxTx PEG) to measure DL PRS resources sent by the same TRP and corresponding to different TRP Tx PEGs (or TRP RxTx PEGs), to obtain the difference between phase delays of the different TRP Tx PEGs (or TRP RxTx PEGs).

In some embodiments, after receiving the first information, the LMF may use the first information to correct the difference between phase delays of phase measurements corresponding to different first PEGs and/or different second PEGs, and perform terminal position calculation based on the corrected phase measurement, thereby improving the accuracy of positioning calculation and further improving the positioning accuracy of the terminal.

For example, the TRP reports the association relationship between the phase measurement and the TRP Rx PEG (e.g., ID) while reporting the phase measurement. When the TRP uses different TRP Rx PEGs to measure the same positioning reference signal (UL SRS-Pos) and reports the corresponding phase measurement to the LMF, the LMF can obtain the difference between phase delays (i.e., phase errors) of the different TRP Rx PEGs.

For example, the TRP reports the association relationship between the phase measurement and the TRP Rx PEG (e.g., ID) while reporting the phase measurement. When the TRP uses different TRP Rx PEGs to measure the same positioning reference signal, the TRP directly reports the difference between phase delays (i.e., phase errors) of the corresponding different TRP Rx PEGs to the LMF.

It should be noted that to enable the reception device to obtain the correspondence between the phase measurement and the second PEG, in some embodiments, before obtaining the first information through measuring the positioning reference signal from the transmission device by the first PEG corresponding to the reception device, the method further includes: receiving a second association relationship from a core network node, wherein the second association relationship is used to indicate a correspondence between an identifier of a second PEG corresponding to the transmission device and a positioning reference signal.

It should be noted that if the reception device usually uses the same first PEG to measure different positioning reference signals from the transmission device, the reception device needs to obtain the second association relationship from the core network node.

The second association relationship is from the transmission device to the core network node, and the core network node forwards it to the reception device.

In some embodiments, the first information may be actively reported by the reception device, or reported by the reception device based on a request. In this case, the method further includes: receiving first request information from a core network node, wherein the first request information is used to request the reception device to obtain the first information.

In some embodiments, when the first information includes a phase measurement and a difference between phase delays, obtaining the first information through measuring the positioning reference signal from the transmission device by the first PEG corresponding to the reception device includes at least one of the following:
B31: using different first PEGs to measure positioning reference signals corresponding to a same second PEG from the transmission device, to obtain phase measurements corresponding to the different first PEGs and a difference between phase delays of the different first PEGs; it should be noted that for the specific implementation process of obtaining the phase measurements respectively corresponding to the different first PEGs, refer to the foregoing description, and details are not repeated herein; after obtaining the phase measurements respectively corresponding to the different first PEGs, the terminal can obtain the difference between phase delays of the different first PEGs based on the phase measurements.

B32: using a same first PEG to measure positioning reference signals respectively corresponding to different second PEGs from the transmission device, to obtain phase measurements corresponding to the different second PEGs and a difference between phase delays of the different second PEGs; it should be noted that for the specific implementation process of obtaining the phase measurements respectively corresponding to the different second PEGs, refer to the foregoing description, and details are not repeated herein. After obtaining the phase measurements respectively corresponding to the different second PEGs, the terminal can obtain the difference between phase delays of the different second PEGs based on the phase measurements.

In some embodiments, the reception device may further obtain second information by measuring the positioning reference signal from the transmission device according to a first TEG; and send the second information to the core network node; the second information includes a timing measurement and/or a difference between timing delays.

In some embodiments, the first TEG includes at least one of the following: a reception TEG, a reception-transmission TEG.

When the first information includes a timing measurement, obtaining the second information through measuring the positioning reference signal from the transmission device by the first TEG corresponding to the reception device includes at least one of the following:
obtaining, by using different first TEGs to measure positioning reference signals corresponding to a same second TEG from the transmission device, timing measurements respectively corresponding to the different first TEGs; and
obtaining, by using a same first TEG to measure positioning reference signals respectively corresponding to different second TEGs from the transmission device, timing measurements respectively corresponding to the different second TEGs;
the second TEG corresponds to the transmission device.

The second TEG includes at least one of the following: a transmission TEG, a reception-transmission TEG.

In some embodiments, when the first information includes a difference between timing delays, obtaining the second information through measuring the positioning reference signal from the transmission device by the first TEG corresponding to the reception device includes at least one of the following:
obtaining, by using different first TEGs to measure positioning reference signals corresponding to a same second TEG from the transmission device, a difference between timing delays of the different first TEGs; and
obtaining, by using a same first TEG to measure positioning reference signals respectively corresponding to different second TEGs from the transmission device, a difference between timing delays of the different second TEGs.

In some embodiments, when the reception device is a TRP, the timing measurement includes an uplink relative time of arrival (RTOA); when the reception device is a UE, the timing measurement includes a downlink reference signal time difference (RSTD) measurement.

In some embodiments, before obtaining the second information through measuring the positioning reference signal from the transmission device by the first TEG corresponding to the reception device, the method further includes: receiving a third association relationship from a core network node, wherein the third association relationship is used to indicate a correspondence between an identifier of the second TEG and a positioning reference signal resource.

It should be noted that the third association relationship is sent from the transmission device to the core network node, and the core network node forwards it to the reception device.

It should be noted that if the terminal reports the second information, the second information may be reported in the same signaling as the first information; alternatively, the terminal may report the first information and the second information through independent signaling.

In some embodiments, the first PEG and the first TEG are associated with the same phase measurement. It should be noted that the measurement refers to a measurement (i.e., a timing measurement and a phase measurement, which may be referred to as a positioning measurement) obtained by measuring the same positioning reference signal.

In some embodiments, the second PEG and the second TEG are associated with the same positioning reference signal.

The following describes specific implementations of the embodiments of the present disclosure.

The following describes specific implementations of the embodiments of the present disclosure as follows.

Application Case 1: for uplink positioning, the transmission device is UE, and the receiving device is TRP

TRP-side implementation steps mainly include following:
Step 1: the TRP obtains the association relationship between the UE Tx PEG ID (or UE RxTx PEG ID) and the positioning reference signal (UL SRS-Pos resource) through forwarding performed by the LMF, and also obtains the definition of the TRP Rx PEG.

In some embodiments, the TRP obtains the association relationship between the UE Tx TEG ID (or UE RxTx TEG ID) and the positioning reference signal (UL SRS-Pos resource) through forwarding performed by the LMF, and also obtains the definition of the TRP Rx TEG.

Step 2: based on a request from the LMF or autonomously, the TRP uses different (or the same) TRP Rx PEG to measure the same (or different) UL SRS-Pos resources sent by the same UE, so as to obtain phase measurements corresponding to different TRP Rx PEGs (or different UE Tx PEGs), or obtain the difference between phase delays of different TRP Rx PEGs (or UE Rx PEGs).

In some embodiments, based on a request from the LMF or autonomously, the TRP uses different (or the same) TRP RxTx PEG to measure the same (or different) UL SRS-Pos resources sent by the same UE, so as to obtain phase measurements corresponding to different TRP RxTx PEGs (or different UE RxTx PEGs), or obtain the difference between phase delays of different TRP RxTx PEGs (or UE RxTx PEGs).

Specifically, the following two implementation methods are included:
Implementation method 1: a TRP uses different TRP Rx PEGs to measure the same UL SRS-Pos resource (i.e., the same UE Tx/RxTx PEG) sent by the same UE, so as to obtain uplink RSCP measurements corresponding to different TRP Rx PEGs, or obtain the difference between phase delays of different TRP Rx PEGs; in some embodiments, a TRP uses different TRP Rx TEGs to measure the same UL SRS-Pos resource (i.e., the same UE Tx/RxTx TEG) sent by the same UE, so as to obtain uplink RTOA measurements corresponding to different TRP Rx TEGs, or obtain the difference between timing delays of different TRP Rx TEGs.

Implementation method 2: a TRP uses the same TRP Rx PEG to measure UL SRS-Pos resources corresponding to different UE Tx PEGs sent by the same UE, so as to obtain uplink RSCP measurements corresponding to different UE Tx PEGs (or UE RxTx PEGs), or obtain the difference between phase delays of different UE Tx PEGs (or UE RxTx PEGs); in some embodiments, a TRP uses the same TRP Rx TEG to measure UL SRS-Pos resources corresponding to different UE Tx TEGs sent by the same UE, so as to obtain uplink RSCP measurements corresponding to different UE Tx TEGs (or UE RxTx TEGs), or obtain the difference between timing delays of different UE Tx TEGs (or UE RxTx TEGs).

Step 3: a TRP reports the phase measurements or the difference between phase delays obtained in Step 2 to the LMF.

It should be noted that the content reported by the TRP is used by the LMF to correct the difference between phase delays (phase errors) of different Tx/Rx transmission channels included in the positioning measurements, thereby improving the accuracy of positioning calculation.

In some embodiments, the TRP may further report corresponding timing measurements or the difference between timing delays to the LMF. In other words, the content reported by the terminal is used by the LMF to correct the difference between time delays (timing errors) of different Tx/Rx transmission channels included in the positioning measurements, thereby improving the accuracy of positioning calculation.

LMF-side implementation steps mainly include following:
Step 1: the LMF receives the correspondence between the UE Tx/RxTx PEG ID and the positioning reference signal (e.g., UL SRS-Pos resource) reported by the UE, and forwards the correspondence to the TRP.

Step 2: the LMF uses the phase measurements reported by the TRP in Step 3, or the difference between phase delays (and the possible rate of change of PEG-corresponding errors), to correct the difference between phase delays of uplink phase measurements corresponding to different Tx/Rx PEGs reported by the TRP. Then, the LMF performs UE position calculation based on the corrected phase measurements to improve the accuracy of positioning calculation.

In some embodiments, the LMF uses the timing measurements reported by the TRP in Step 3, or the difference between timing delays (and the possible rate of change of TEG-corresponding errors), to correct the difference between timing delays of uplink timing measurements corresponding to different Tx/Rx PEGs reported by the TRP. Then, the LMF performs UE position calculation based on the corrected timing measurements to improve the accuracy of positioning calculation.

UE-side implementation steps mainly include following:
Step 1: for uplink positioning, the UE reports the association relationship between the UE Tx PEG ID (or UE RxTx PEG ID) and the positioning reference signal (e.g., UL SRS-Pos resource) to the LMF based on a request from the LMF or autonomously. In some embodiments, the UE Tx PEG (or UE RxTx PEG) and the UE Tx TEG (or UE RxTx TEG) may be reported simultaneously in the same reporting signaling, or separately in different reporting signaling. In some embodiments, the UE Tx PEG (or UE RxTx PEG) and the UE Tx TEG (or UE RxTx TEG) are associated with the same UL-Pos resource.

Step 2: the UE sends the UL SRS-Pos associated with the UE Tx PEG ID (or UE RxTx PEG ID) to the TRP.

Application Case 2: for uplink-downlink joint positioning, the TRP serves as both a transmitter for sending DL PRS and a receiver for receiving UL SRS-Pos; the UE serves as both a transmitter for sending UL SRS-Pos and a receiver for receiving DL PRS.

UE-side implementation steps mainly include following: (it should be noted that, when acting as the transmitter of UL SRS-Pos, steps 1-2 of the UE are the same as those in Application Case 1; when acting as the receiver of DL PRS, the UE has independent steps 3-4, and there is no fixed sequence between Steps 1-2 and Steps 3-4.)

Step 1: the UE reports the association relationship between the UE Tx PEG ID (or UE RxTx PEG ID) and the positioning reference signal (e.g., UL SRS-Pos resource) to the LMF based on a request from the LMF or autonomously. In some embodiments, the UE Tx PEG (or UE RxTx PEG) and the UE Tx TEG (or UE RxTx TEG) may be reported simultaneously in the same reporting signaling, or separately in different reporting signaling. In some embodiments, the UE Tx PEG (or UE RxTx PEG) and the UE Tx TEG (or UE RxTx TEG) are associated with the same UL SRS-Pos resource.

Step 2: the UE sends the UL SRS-Pos resource associated with the UE Tx PEG ID (or UE RxTx PEG ID) to the TRP.

Step 3: the UE obtains the association relationship between the TRP Tx PEG ID (or TRP RxTx PEG ID) and the positioning reference signal (DL PRS resource) through forwarding performed by the LMF, and also obtains the definition of the UE Rx PEG. In some embodiments, the UE obtains the association relationship between the TRP Tx TEG ID (or TRP RxTx TEG ID) and the positioning reference signal (DL PRS resource) through forwarding performed by the LMF, and also obtains the definition of the UE Rx TEG.

Step 4: based on a request from the LMF or autonomously, the UE uses different (or the same) UE Rx PEG to measure the same (or different) DL PRS resources sent by the same TRP, so as to obtain phase measurements corresponding to different UE Rx PEGs (or different TRP Tx PEGs), or obtain the difference between phase delays of different UE Rx PEGs (or TRP Rx PEGs).

Specifically, the following two implementation methods are included:
Implementation Method 1: the UE uses different UE Rx PEGs to measure the same DL PRS resource (i.e., the same TRP Tx PEG) sent by the same TRP, so as to obtain downlink RSCPD/RSCP measurements corresponding to different UE Rx PEGs, or obtain the difference between phase delays of different UE Rx PEGs; in some embodiments, the UE uses different UE Rx TEGs to measure the same DL PRS resource (i.e., the same TRP Tx TEG) sent by the same TRP, so as to obtain downlink RSTD measurements corresponding to different UE Rx TEGs, or obtain the difference between timing delays of different UE Rx TEGs.

Implementation Method 2: the UE uses the same UE Rx PEG to measure DL PRS resources corresponding to different TRP Tx PEGs sent by the same TRP, so as to obtain downlink RSCPD measurements (as positioning measurements) corresponding to different TRP Tx PEGs, or obtain the difference between phase delays of different TRP Tx PEGs of the TRP;
In some embodiments, the UE uses the same UE Rx TEG to measure DL PRS resources corresponding to different TRP Tx TEGs sent by the same TRP, so as to obtain downlink RSCPD measurements (as positioning measurements) corresponding to different TRP Tx TEGs, or obtain the difference between phase delays of different TRP Tx TEGs of the TRP.

Step 5: the UE reports the phase measurements or the difference between phase delays obtained in Step 4 to the LMF.

It should be noted that the content reported by the terminal is used by the LMF to correct the difference between phase delays of downlink phase measurements corresponding to different Tx/Rx PEGs, thereby improving the accuracy of positioning calculation.

In some embodiments, the UE may further report corresponding timing measurements or the difference between timing delays to the LMF; in other words, the content reported by the terminal is used by the LMF to correct the difference between timing delays of downlink timing measurements corresponding to different Tx/Rx PEGs, thereby improving the accuracy of positioning calculation.

In some embodiments, the Rx PEG and Rx TEG may report together or separately (i.e., report together in the same measurement report or separately). In some embodiments, the Rx PEG and Rx TEG are associated with the same measurement, and downlink differential measurements are associated with the same reference TRP.

Further, the following two methods are included:
Method 1: while reporting DL RSCP/RSCPD measurements, the UE also reports the association relationship between the DL RSCP/RSCPD measurements and the UE Rx PEG (e.g., identifier value ID). When the UE uses different UE Rx PEGs to measure the same positioning reference signal (DL PRS) and reports the corresponding DL RSCP/RSCPD measurements to the LMF, the LMF can obtain the difference between phase delays (i.e., phase errors) of different UE Rx PEGs.

Method 2: while reporting DL RSCP/RSCPD measurements, the UE also reports the association relationship between the DL RSCP/RSCPD measurements and the UE Rx PEG (e.g., identifier value ID). When the UE uses different UE Rx PEGs to measure the same positioning reference signal, the UE directly reports the difference between phase delays (i.e., phase errors) of the corresponding UE Rx PEGs to the LMF. Similarly, the UE may report the difference between time delays (i.e., timing errors) of the corresponding UE Rx TEGs to the LMF.

For Method 1, the measurements can be associated with timestamps to facilitate the LMF in calculating the time rate of change of the difference. For Method 2, the time rate of change of the difference may be further reported. During the process of obtaining the aforementioned measurements, the UE may perform averaging or smoothing on the positioning measurements based on the valid time period information bound between the Rx PEG (TEG)/Tx PEG (TEG) and the positioning measurements/reference signal resources. The valid time period information is determined in one of the following three ways: predefined by the protocol, reported in real time by the UE/base station, or the LMF notifies of a new PEG (TEG) association relationship.

LMF-side implementation steps mainly include following:
(It should be noted that steps 1/3 of the LMF are the same as steps 1/2 of Application Case 1; there is no fixed sequence between steps 1-2 and steps 3-4; step 5 can only be implemented after steps 1-4 are completed.)

Step 1: the LMF receives the correspondence between the UE Tx/RxTx PEG ID and the positioning reference signal (e.g., UL SRS-Pos resource) reported by the UE. In some embodiments, the LMF may forward the correspondence to the TRP.

Step 2: the LMF receives the correspondence between the TRP Tx/RxTx PEG ID and the positioning reference signal (e.g., DL PRS resource) reported by the TRP. In some embodiments, the LMF may forward the correspondence to the UE.

Step 3: the LMF uses the phase measurements reported by the TRP in its Step 3, or the difference between phase delays (and the possible rate of change of PEG-corresponding errors), to correct the difference between phase delays of uplink phase measurements corresponding to different Tx/Rx PEGs reported by the TRP. Then, the LMF performs UE position calculation based on the corrected phase measurements to improve the accuracy of positioning calculation.

In some embodiments, the LMF uses the timing measurements reported by the TRP in its Step 3, or the difference between timing delays (and the possible rate of change of TEG-corresponding errors), to correct the difference between timing delays of uplink timing measurements corresponding to different Tx/Rx PEGs reported by the TRP. Then, the LMF performs UE position calculation based on the corrected timing measurements to improve the accuracy of positioning calculation.

Step 4: the LMF uses the phase measurements reported by the UE in its Step 5, or the difference between phase delays (and the possible rate of change of PEG-corresponding errors), to correct the difference between phase delays of uplink phase measurements corresponding to different Tx/Rx PEGs reported by the UE. Then, the LMF performs UE position calculation based on the corrected phase measurements to improve the accuracy of positioning calculation; in some embodiments, the LMF uses the timing measurements reported by the UE in its Step 5, or the difference between timing delays (and the possible rate of change of TEG-corresponding errors), to correct the difference between timing delays of uplink timing measurements corresponding to different Tx/Rx PEGs reported by the UE. Then, the LMF performs UE position calculation based on the corrected timing measurements to improve the accuracy of positioning calculation.

Step 5: the LMF calculates the UE position based on the corrected phase measurements obtained in Steps 3 and 4, as well as parameters such as the known TRP position, thereby improving the accuracy of positioning calculation or reducing the requirement for the number of TRPs.

In some embodiments, the LMF calculates the UE position based on the corrected timing measurements obtained in Steps 3 and 4, as well as parameters such as the known TRP position, thereby improving the accuracy of positioning calculation or reducing the requirement for the number of TRPs.

TRP-side implementation steps mainly include following: (it should be noted that, when acting as the receiver of UL SRS-Pos, steps 1-3 of the TRP are identical to those in Application Case 1; when acting as the transmitter of DL PRS, the TRP has independent steps 4-5, and there is no fixed sequence between steps 1-3 and steps 4-5.)

Step 1: the TRP obtains the association relationship between the UE Tx PEG ID (or UE RxTx PEG ID) and the positioning reference signal (UL SRS-Pos resource) through forwarding performed by the LMF, and also obtains the definition of the TRP Rx PEG. In some embodiments, the TRP obtains the association relationship between the UE Tx TEG ID (or UE RxTx TEG ID) and the positioning reference signal (UL SRS-Pos resource) through forwarding performed by the LMF, and also obtains the definition of the TRP Rx TEG.

Step 2: based on a request from the LMF or autonomously, the TRP uses different (or the same) TRP Rx PEG to measure the same (or different) UL SRS-Pos resources sent by the same UE, so as to obtain phase measurements corresponding to different TRP Rx PEGs (or different UE Tx PEGs), or obtain the difference between phase delays of different TRP Rx PEGs (or UE Rx PEGs).

In some embodiments, based on a request from the LMF or autonomously, the TRP uses different (or the same) TRP RxTx PEG to measure the same (or different) UL SRS-Pos resources sent by the same UE, so as to obtain phase measurements corresponding to different TRP RxTx PEGs (or different UE RxTx PEGs), or obtain the difference between phase delays of different TRP RxTx PEGs (or UE RxTx PEGs).

Specifically, the following two implementation methods are included:
Implementation Method 1: one TRP uses different TRP Rx PEGs to measure the same UL SRS-Pos resource (i.e., the same UE Tx/RxTx PEG) sent by the same UE, so as to obtain uplink RSCP measurements corresponding to different TRP Rx PEGs, or obtain the difference between phase delays of different TRP Rx PEGs; in some embodiments, a TRP uses different TRP Rx TEGs to measure the same UL SRS-Pos resource (i.e., the same UE Tx/RxTx TEG) sent by the same UE, so as to obtain uplink RTOA measurements corresponding to different TRP Rx TEGs, or obtain the difference between timing delays of different TRP Rx TEGs.

Implementation Method 2: one TRP uses the same TRP Rx PEG to measure UL SRS-Pos resources corresponding to different UE Tx PEGs sent by the same UE, so as to obtain uplink RSCP measurements corresponding to different UE Tx PEGs (or UE RxTx PEGs), or obtain the difference between phase delays of different UE Tx PEGs (or UE RxTx PEGs); in some embodiments, a TRP uses the same TRP Rx TEG to measure UL SRS-Pos resources corresponding to different UE Tx TEGs sent by the same UE, so as to obtain uplink RSCP measurements corresponding to different UE Tx TEGs (or UE RxTx TEGs), or obtain the difference between timing delays of different UE Tx TEGs (or UE RxTx TEGs).

Step 3: the TRP reports the phase measurements or the difference between phase delays obtained in step 2 to the LMF.

It should be noted that the content reported by the TRP is used by the LMF to correct the difference between phase delays (phase errors) of different Tx/Rx transmission channels included in the positioning measurements, thereby improving the accuracy of positioning calculation.

In some embodiments, the TRP may further report corresponding timing measurements or the difference between timing delays to the LMF. In other words, the content reported by the terminal is used by the LMF to correct the difference between time delays (timing errors) of different Tx/Rx transmission channels included in the positioning measurements, thereby improving the accuracy of positioning calculation.

Step 4: based on a request from the LMF or autonomously, the TRP reports the association relationship between the TRP Tx PEG ID (or TRP RxTx PEG ID) and the positioning reference signal (e.g., DL PRS resource) to the LMF. In some embodiments, the TRP Tx PEG (or TRP RxTx PEG) and the TRP Tx TEG (or TRP RxTx TEG) may report simultaneously in the same reporting signaling, or separately in different reporting signaling. In some embodiments, the TRP Tx PEG (or TRP RxTx PEG) and the TRP Tx TEG (or TRP RxTx TEG) are associated with the same DL PRS resource.

Step 5: the TRP sends the DL PRS resource associated with the TRP Tx PEG ID (or TRP RxTx PEG ID) to the UE.

It should be noted that at least one embodiment of the present disclosure provides an uplink and uplink-downlink joint positioning method, which solves the problem of phase delay (or phase delay and time delay) in uplink and uplink-downlink joint positioning methods, improves the accuracy of positioning calculation, or reduces the requirement for positioning a sending node.

The technical solutions provided in the embodiments of the present disclosure can be applied to various systems, especially 5G systems. For example, the applicable systems may include a Global System for Mobile Communications (GSM) system, a Code Division Multiple Access (CDMA) system, a Wideband Code Division Multiple Access (WCDMA) General Packet Radio Service (GPRS) system, a Long Term Evolution (LTE) system, an LTE Frequency Division Duplex (FDD) system, an LTE Time Division Duplex (TDD) system, a Long Term Evolution Advanced (LTE-A) system, a Universal Mobile Telecommunications System (UMTS), a Worldwide Interoperability for Microwave Access (WiMAX) system, a 5G New Radio (NR) system, and the like. Each of these systems includes a terminal (also referred to as a terminal device) and a network device. The system may further include a core network part, such as an Evolved Packet System (EPS) or a 5G System (5GS).

The terminal involved in the embodiments of the present disclosure may also be called a terminal device, which refers to a device that provides voice and/or data connectivity for users, such as a handheld device with a wireless connection function or another processing device connected to a wireless modem. The name of the terminal device may vary in different systems; for example, in a 5G system, the terminal device may be called User Equipment (UE). A wireless terminal device can communicate with one or more core networks (CN) through a Radio Access Network (RAN). The wireless terminal device may be a mobile terminal device, such as a mobile phone (also called a "cellular" phone) or a computer with a mobile terminal device. For example, it may be a portable, pocket-sized, handheld, in-vehicle mobile device built into a computer, which exchanges voice and/or data with the radio access network. Examples include a Personal Communication Service (PCS) phone, a cordless phone, a Session Initiation Protocol (SIP) phone, a Wireless Local Loop (WLL) station, or a Personal Digital Assistant (PDA). The wireless terminal device may also be referred to as a system, a subscriber unit, a subscriber station, a mobile station, a mobile terminal, a remote station, an access point, a remote terminal, an access terminal, a user terminal, a user agent, or a user device, which is not limited in the embodiments of the present disclosure.

The network device involved in the embodiments of the present disclosure may be a base station, which may include multiple cells for serving terminals. Depending on specific application scenarios, the base station may also be called an access point, or a device in the access network that communicates with a wireless terminal device through one or more sectors over the air interface, or by other names. The network device can act as a router between the wireless terminal device and the rest of the access network (which may include an Internet Protocol (IP) communication network) by converting received over-the-air frames into IP packets. The network device can also coordinate the management of air interface attributes. For example, the network device involved in the embodiments of the present disclosure may be a Base Transceiver Station (BTS) in a Global System for Mobile Communications (GSM) or Code Division Multiple Access (CDMA) system, a NodeB in a Wideband Code Division Multiple Access (WCDMA) system, an Evolved Node B (eNB or e-NodeB) in a Long Term Evolution (LTE) system, a 5G base station (gNB) in a next-generation system, a Home Evolved Node B (HeNB), a relay node, a home base station (femto), a pico base station, etc., which is not limited in the embodiments of the present disclosure. In some network structures, the network device may include a Centralized Unit (CU) node and a Distributed Unit (DU) node, and the centralized unit and the distributed unit may also be arranged geographically separately.

Both the network device and the terminal device can use one or more antennas for Multi-Input Multi-Output (MIMO) transmission. The MIMO transmission may be Single-User MIMO (SU-MIMO) or Multi-User MIMO (MU-MIMO). Depending on the form and number of antenna combinations, MIMO transmission may be Two-Dimensional MIMO (2D-MIMO), Three-Dimensional MIMO (3D-MIMO), Full-Dimension MIMO (FD-MIMO), or Massive MIMO (massive-MIMO), and may also be diversity transmission, precoding transmission, or beamforming transmission.

As shown in FIG. 3, an embodiment of the present disclosure provides an information transmission method executed by a core network node, including:
Step S301: receive first information from a reception device, wherein the first information is obtained by the reception device, based on a first Phase Error Group (PEG) corresponding to the reception device measuring a positioning reference signal from a transmission device; the first information includes phase measurements and/or the difference between phase delays.

In some embodiments, the phase measurements include at least one of the following: phase measurements corresponding to different first PEGs respectively; phase measurements corresponding to different second PEGs respectively, wherein the second PEG corresponds to the transmission device.

In some embodiments, the difference between phase delays includes at least one of the following: the difference between phase delays of different first PEGs; the difference between phase delays of different second PEGs, wherein the second PEG corresponds to the transmission device.

In some embodiments, when the first information includes phase measurements, the method further includes: receiving a first association relationship from the reception device, wherein the first association relationship is used to indicate the correspondence between the first PEG and the phase measurements.

In some embodiments, the method further includes: sending first request information to the reception device, wherein the first request information is used to request the reception device to obtain the first information.

In some embodiments, the method further includes: receiving a second association relationship from the transmission device, wherein the second association relationship is used to indicate the correspondence between the identifier of the second PEG and the positioning reference signal; sending the second association relationship to the reception device; wherein the second PEG corresponds to the transmission device.

In some embodiments, the method further includes: sending second request information to the transmission device, wherein the second request information is used to request the acquisition of the correspondence between the identifier of the second PEG and the positioning reference signal.

In some embodiments, the method further includes: based on the first information, correcting the difference between phase delays of phase measurements corresponding to different first PEGs and/or different second PEGs; performing terminal position calculation based on the corrected phase measurements.

In some embodiments, the first PEG includes at least one of the following: a reception PEG, a reception-transmission PEG.

In some embodiments, the reception PEG satisfies at least one of the following:
the reception PEG is associated with at least one phase measurement; the reception phase error contained in the reception PEG is within a first range, and the reception phase error corresponds to the phase measurement;
wherein, the reception phase error includes: the phase error of an uncalibrated reception radio frequency chain or a remaining phase error of a reception radio frequency chain after calibration and/or the uncalibrated phase error of a reception antenna or remaining phase error of the reception antenna after calibration; an uncalibrated phase center offset or the remaining phase center offset after calibration from the reception antenna Phase Center (APC) to the physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; the transmission phase error contained in the transmission PEG is within a second range, and the transmission phase error corresponds to the positioning reference signal;
wherein, the transmission phase error includes: the uncalibrated phase error or the remaining phase error after calibration of a transmission radio frequency chain and/or the uncalibrated phase error or the remaining phase error after calibration of a transmission antenna; the uncalibrated phase center offset or the remaining phase center offset after calibration from the transmit APC to the physical antenna reference point (ARP).

In some embodiments, the reception-transmission PEG satisfies at least one of the following: one reception-transmission PEG is associated with at least one phase measurement and at least one positioning reference signal; the sum of the reception phase error and the transmission phase error contained in the reception-transmission PEG is within a third range, wherein the reception phase error corresponds to the phase measurement and the transmission phase error corresponds to the positioning reference signal.

In some embodiments, when the reception device is a terminal, the positioning reference signal is a downlink positioning reference signal (PRS) for positioning; when the reception device is a network device, the positioning reference signal is an uplink sounding reference signal (SRS-Pos) for positioning.

It should be noted that all implementation manners in the foregoing embodiments are applicable to the embodiment of the information transmission method applied to the core network node side, and can also achieve the same technical effects, which are not repeated herein.

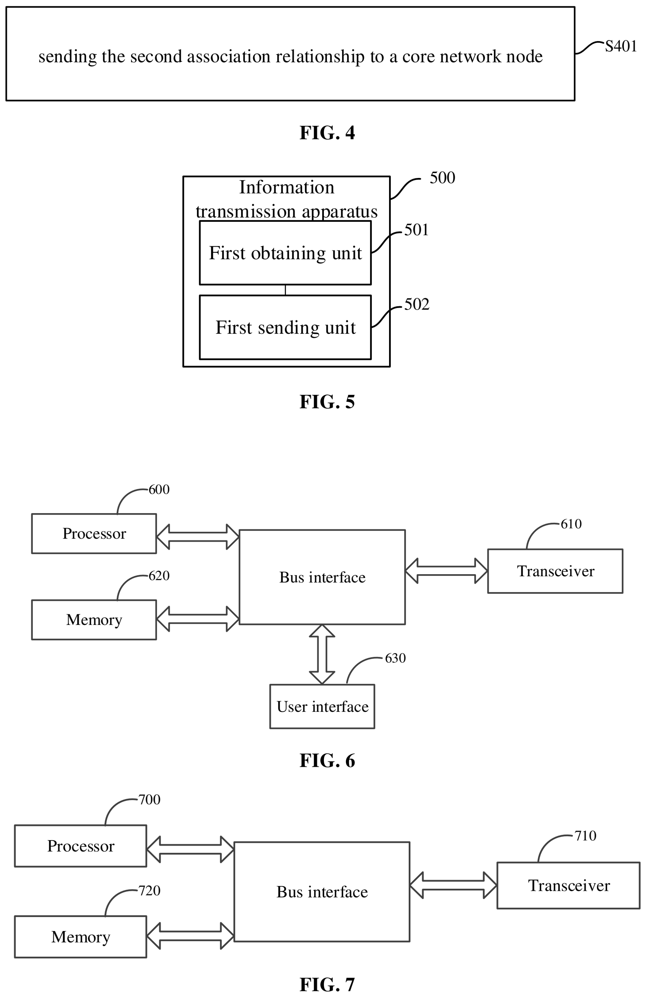

As shown in FIG. 4, an embodiment of the present disclosure provides an information transmission method executed by a transmission device, including:
Step S401: sending a second association relationship to a core network node, wherein the second association relationship is used to indicate the correspondence between the identifier of a second Phase Error Group (PEG) and a positioning reference signal, and the second PEG corresponds to the transmission device.

In some embodiments, the method further includes: sending the positioning reference signal to the reception device.

It should be noted that all implementation manners in the foregoing embodiments are applicable to the embodiment of the information transmission method applied to the transmission device side, and can also achieve the same technical effects, which are not repeated herein.

As shown in FIG. 5, an embodiment of the present disclosure provides an information transmission apparatus 500, applied to a reception device, including:
a first obtaining unit 501, configured to obtain first information based on measuring a positioning reference signal from a transmission device by a first Phase Error Group (PEG) corresponding to the reception device;
a first sending unit 502, configured to send the first information to a core network node;
the first information includes phase measurements and/or the difference between phase delays.

In some embodiments, when the first information includes phase measurements, the first obtaining unit 501 is configured to implement at least one of the following:
using different first PEGs to measure positioning reference signals corresponding to the same second PEG from the transmission device, so as to obtain phase measurements corresponding to different first PEGs respectively;
using the same first PEG to measure positioning reference signals corresponding to different second PEGs from the transmission device, so as to obtain phase measurements corresponding to different second PEGs respectively;
the second PEG corresponds to the transmission device.

In some embodiments, when the first information includes the difference between phase delays, the first obtaining unit 501 is configured to implement at least one of the following:
using different first PEGs to measure positioning reference signals corresponding to the same second PEG from the transmission device, so as to obtain the difference between phase delays of different first PEGs;
using the same first PEG to measure positioning reference signals corresponding to different second PEGs from the transmission device, so as to obtain the difference between phase delays of different second PEGs; the second PEG corresponds to the transmission device.

In some embodiments, when the first information includes phase measurements, the apparatus further includes: a reporting unit, configured to report a first association relationship, wherein the first association relationship is used to indicate the correspondence between the first PEG and the phase measurements.

In some embodiments, the apparatus further includes: a second receiving unit, configured to receive first request information from a core network node, wherein the first request information is used to request the reception device to obtain the first information.

In some embodiments, the apparatus further includes: a third receiving unit, configured to receive a second association relationship from a core network node, wherein the second association relationship is used to indicate the correspondence between the identifier of a second PEG corresponding to the transmission device and the positioning reference signal.

In some embodiments, the first PEG and a first Timing Error Group (TEG) are associated with the same phase measurement; and/or the second PEG and a second TEG are associated with the same positioning reference signal; wherein, the first TEG includes at least one of the following: a reception TEG, a reception-transmission TEG; the second TEG includes at least one of the following: a transmission TEG, a reception-transmission TEG.

In some embodiments, the first PEG corresponding to the reception device includes at least one of the following: a reception PEG, a reception-transmission PEG.

In some embodiments, the reception PEG satisfies at least one of the following: the reception PEG is associated with at least one phase measurement; the reception phase error contained in the reception PEG is within a first range, and the reception phase error corresponds to the phase measurement;
wherein, the reception phase error includes: the uncalibrated phase error or the remaining phase error after calibration of a reception radio frequency chain and/or the uncalibrated phase error or the remaining phase error after calibration of a reception antenna; the uncalibrated phase center offset or the remaining phase center offset after calibration from the reception antenna Phase Center (APC) to the physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; the transmission phase error contained in the transmission PEG is within a second range, and the transmission phase error corresponds to the positioning reference signal;
wherein, the transmission phase error includes: the uncalibrated phase error or the remaining phase error after calibration of a transmission radio frequency chain and/or the uncalibrated phase error or the remaining phase error after calibration of a transmission antenna; the uncalibrated phase center offset or the remaining phase center offset after calibration from the transmission APC to the physical antenna reference point (ARP).

In some embodiments, the reception-transmission PEG satisfies at least one of the following:

one reception-transmission PEG is associated with at least one phase measurement and at least one positioning reference signal; the sum of the reception phase error and the transmission phase error contained in the reception-transmission PEG is within a third range, wherein the reception phase error corresponds to the phase measurement and the transmission phase error corresponds to the positioning reference signal.

In some embodiments, when the reception device is a terminal, the positioning reference signal is a downlink positioning reference signal (PRS) for positioning;
when the reception device is a network device, the positioning reference signal is an uplink sounding reference signal (SRS-Pos) for positioning.

It should be noted that this apparatus embodiment corresponds to the foregoing method embodiment in a one-to-one manner, and all implementation manners in the foregoing method embodiment are applicable to this apparatus embodiment and can also achieve the same technical effects.

It should be noted that the division of units in the embodiments of the present disclosure is schematic and only represents a logical function division; there may be other division manners in actual implementation. In addition, functional units in the embodiments of the present disclosure may be integrated into one processing unit, or each unit may exist physically independently, or two or more units may be integrated into one unit. The integrated unit may be implemented in the form of hardware or in the form of a software functional unit.

When the integrated unit is implemented in the form of a software functional unit and sold or used as an independent product, it may be stored in a processor-readable storage medium. Based on this understanding, the technical solution of the present disclosure essentially, or the part that contributes to the related art, or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The aforementioned storage medium includes various media that can store program codes, such as a USB flash drive, a removable hard disk, a Read-Only Memory (ROM), a Random Access Memory (RAM), a magnetic disk, or an optical disk.

In some embodiments, an embodiment of the present disclosure further provides a transmission device. The first structure of the transmission device is shown in FIG. 6, which includes a processor 600, a transceiver 610, a memory 620, and a program stored in the memory 620 and executable on the processor 600. The transceiver 610 is connected to the processor 600 and the memory 620 through a bus interface. The processor 600 is configured to read the program in the memory and execute the following processes:
obtaining first information based on measuring a positioning reference signal from a transmission device by a first Phase Error Group (PEG) corresponding to a reception device;
sending the first information to a core network node through the transceiver;
wherein the first information includes phase measurements and/or the difference between phase delays.

The transceiver 610 is configured to receive and send data under the control of the processor 600.

In FIG. 6, the bus architecture may include any number of interconnected buses and bridges. Specifically, various circuits of one or more processors represented by the processor 600 and various circuits of the memory represented by the memory 620 are connected together. The bus architecture can also connect various other circuits such as peripheral devices, voltage regulators, and power management circuits, which are well-known in the art and will not be further described herein. The bus interface provides an interface. The transceiver 610 may be multiple components, i.e., including a transmitter and a receiver, and provides a unit for communicating with various other devices on a transmission medium (including wireless channels, wired channels, optical cables, etc.). For different user devices, the user interface 630 may also be an interface capable of connecting internal and external required devices, and the connected devices include but are not limited to a keypad, a display, a speaker, a microphone, a joystick, etc.

The processor 600 is responsible for managing the bus architecture and general processing, and the memory 620 may store data used by the processor 600 when performing operations.

In some embodiments, the processor 600 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory and is configured to execute any of the methods provided in the embodiments of the present disclosure according to the obtained executable instructions. The processor and the memory may also be arranged physically separately.

In some embodiments, an embodiment of the present disclosure further provides a transmission device. The second structure of the transmission device is shown in FIG. 7, which includes a processor 700, a transceiver 710, a memory 720, and a program stored in the memory 720 and executable on the processor 700. The transceiver 710 is connected to the processor 700 and the memory 720 through a bus interface. The processor 700 is configured to read the program in the memory and execute the following processes:
obtaining first information based on measuring a positioning reference signal from a transmission device by on a first Phase Error Group (PEG) corresponding to a reception device;
sending the first information to a core network node through the transceiver;
wherein the first information includes phase measurements and/or the difference between phase delays.

In FIG. 7, the bus architecture may include any number of interconnected buses and bridges. Specifically, various circuits of one or more processors represented by the processor 700 and the memory represented by the memory 720 are connected together. The bus architecture can also connect various other circuits such as peripheral devices, voltage regulators, and power management circuits, which are well-known in the art and will not be further described herein. The bus interface provides an interface. The transceiver 710 may be multiple components, i.e., including a transmitter and a receiver, and provides a unit for communicating with various other devices on a transmission medium (including wireless channels, wired channels, optical cables, etc.). For different user devices, the user interface 730 may also be an interface capable of connecting internal and external required devices, and the connected devices include but are not limited to a keypad, a display, a speaker, a microphone, a joystick, etc.

The processor 700 is responsible for managing the bus architecture and general processing, and the memory 720 may store data used by the processor 700 when performing operations.

In some embodiments, the processor 700 may be a Central Processing Unit (CPU), an Application-Specific Integrated Circuit (ASIC), a Field-Programmable Gate Array (FPGA), or a Complex Programmable Logic Device (CPLD), and the processor may also adopt a multi-core architecture.

The processor invokes the computer program stored in the memory and is configured to execute any of the methods provided in the embodiments of the present disclosure according to the obtained executable instructions. The processor and the memory may also be arranged physically separately.

Specifically, under the above two structures, the specific implementation mainly includes: in some embodiments, when the first information includes phase measurements, the processor is configured to read the computer program in the memory and execute at least one of the following operations:
using different first PEGs to measure positioning reference signals corresponding to the same second PEG from the transmission device, and obtaining phase measurements corresponding to different first PEGs respectively;
using the same first PEG to measure positioning reference signals corresponding to different second PEGs from the transmission device, and obtaining phase measurements corresponding to different second PEGs respectively;
wherein the second PEG corresponds to the transmission device.

In some embodiments, when the first information includes the difference between phase delays, the processor is configured to read the computer program in the memory and execute at least one of the following operations:
using different first PEGs to measure positioning reference signals corresponding to the same second PEG from the transmission device, and obtaining the difference between phase delays of different first PEGs;
using the same first PEG to measure positioning reference signals corresponding to different second PEGs from the transmission device, and obtaining the difference between phase delays of different second PEGs;
wherein the second PEG corresponds to the transmission device.

In some embodiments, when the first information includes phase measurements, the processor is configured to read the computer program in the memory and further execute the following operation:
reporting a first association relationship, wherein the first association relationship is used to indicate the correspondence between the first PEG and the phase measurements.

In some embodiments, the processor is configured to read the computer program in the memory and further execute the following operation:
receiving first request information from a core network node through the transceiver, wherein the first request information is used to request the reception device to acquire the first information.

In some embodiments, the processor is configured to read the computer program in the memory and further execute the following operation:
receiving a second association relationship from a core network node through the transceiver,
wherein the second association relationship is used to indicate the correspondence between the identifier of a second PEG corresponding to the transmission device and the positioning reference signal.

In some embodiments, the first PEG and a first Timing Error Group (TEG) are associated with the same phase measurement; and/or the second PEG and a second TEG are associated with the same positioning reference signal;
wherein, the first TEG includes at least one of the following: a reception TEG, a reception-transmission TEG; the second TEG includes at least one of the following: a transmission TEG, a reception-transmission TEG.

In some embodiments, the first PEG corresponding to the reception device includes at least one of the following: a reception PEG, a reception-transmission PEG.

In some embodiments, the reception PEG satisfies at least one of the following:
the reception PEG is associated with at least one phase measurement; the reception phase error contained in the reception PEG is within a first range, and the reception phase error corresponds to the phase measurement;
wherein, the reception phase error includes: the uncalibrated phase error or the remaining phase error after calibration of a reception radio frequency chain and/or the uncalibrated phase error or the remaining phase error after calibration of the transmission antenna; the uncalibrated phase center offset or the remaining phase center offset after calibration from the reception antenna Phase Center (APC) to the physical measurement reference point (MRP).

In some embodiments, the second PEG includes at least one of the following: a transmission PEG, a reception-transmission PEG.

In some embodiments, the transmission PEG satisfies at least one of the following: the transmission PEG is associated with at least one positioning reference signal; the transmission phase error contained in the transmission PEG is within a second range, and the transmission phase error corresponds to the positioning reference signal;
wherein, the transmission phase error includes: the uncalibrated phase error or the remaining phase error after calibration of a transmission radio frequency chain and/or the uncalibrated phase error or the remaining phase error after calibration of a transmission antenna; the uncalibrated phase center offset or the remaining phase center offset after calibration from the remaining transmit APC to the physical antenna reference point (ARP).

In some embodiments, the reception-transmission PEG satisfies at least one of the following:
one reception-transmission PEG is associated with at least one phase measurement and at least one positioning reference signal;
the sum of the reception phase error and the transmission phase error contained in the reception-transmission PEG is within a third range, wherein the reception phase error corresponds to the phase measurement and the transmission phase error corresponds to the positioning reference signal.

In some embodiments, when the reception device is a terminal, the positioning reference signal is a downlink positioning reference signal (PRS) for positioning;
when the reception device is a network device, the positioning reference signal is an uplink sounding reference signal (SRS-Pos) for positioning.

It should be noted that the transmission device provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a computer-readable storage medium, on which a computer program is stored. When the computer program is executed by a processor, the steps of the information transmission method applied to the transmission device are implemented. The processor-readable storage medium may be any available medium or data storage device that can be accessed by a processor, including but not limited to magnetic memories (such as floppy disks, hard disks, magnetic tapes, magneto-optical disks (MO), etc.), optical memories (such as Compact Discs (CDs), Digital Versatile Discs (DVDs), Blu-ray Discs (BDs), High-Definition DVDs (HVDs), etc.), and semiconductor memories (such as Read-Only Memories (ROMs), Erasable Programmable ROMs (EPROMs), Electrically Erasable Programmable ROMs (EEPROMs), non-volatile memories (NAND FLASH), Solid-State Drives (SSDs), etc.).

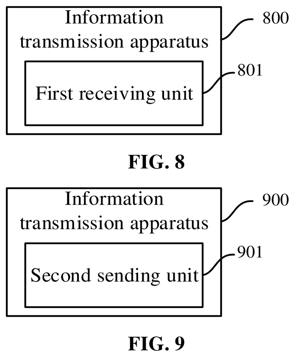

As shown in FIG. 8, an embodiment of the present disclosure provides an information transmission apparatus 800, applied to a core network node, including:
a first receiving unit 801, configured to receive first information from a reception device, wherein the first information is obtained by the reception device based on measuring a positioning reference signal from a transmission device by a first Phase Error Group (PEG) corresponding to the reception device;
wherein the first information includes phase measurements and/or the difference between phase delays.

In some embodiments, the phase measurements include at least one of the following: phase measurements corresponding to different first PEGs respectively; phase measurements corresponding to different second PEGs respectively, wherein the second PEG corresponds to the transmission device.

In some embodiments, the difference between phase delays includes at least one of the following:
the difference between phase delays of different first PEGs; the difference between phase delays of different second PEGs, wherein the second PEG corresponds to the transmission device.

In some embodiments, when the first information includes phase measurements, the apparatus further includes:
a unit for receiving a first association relationship from the reception device, wherein the first association relationship is used to indicate the correspondence between the first PEG and the phase measurements.

In some embodiments, the apparatus further includes:
a third sending unit, configured to send first request information to the reception device, wherein
the first request information is used to request the reception device to acquire the first information.

In some embodiments, the apparatus further includes:
a fourth receiving unit, configured to receive a second association relationship from the transmission device, wherein the second association relationship is used to indicate the correspondence between the identifier of the second PEG and the positioning reference signal; and
a unit for sending the second association relationship to the reception device;
wherein the second PEG corresponds to the transmission device.

In some embodiments, the apparatus further includes:
a fourth sending unit, configured to send second request information to the transmission device,
wherein the second request information is used to request to obtain the correspondence between the identifier of the second PEG and the positioning reference signal.

In some embodiments, the apparatus further includes:
a correction unit, configured to correct the difference between phase delays of phase measurements corresponding to different first PEGs and/or different second PEGs based on the first information;
a calculation unit, configured to perform terminal position calculation based on the corrected phase measurements.

In some embodiments, the first PEG includes at least one of the following: a reception PEG, a reception-transmission PEG.

In some embodiments, the reception PEG satisfies at least one of the following:
the reception PEG is associated with at least one phase measurement;
the reception phase error contained in the reception PEG is within a first range, and the reception phase error corresponds to the phase measurement;
wherein, the reception phase error includes:
the uncalibrated phase error or a remaining phase error after calibration of a reception radio frequency chain and/or the uncalibrated phase error or a remaining phase error after calibration of a reception antenna;
the uncalibrated phase center offset or the remaining phase center offset after calibration from the reception antenna Phase Center (APC) to the physical measurement reference point (MRP).

In some embodiments, the second PEG includes at least one of the following: a transmission PEG, a reception-transmission PEG.

In some embodiments, the transmission PEG satisfies at least one of the following:
the transmission PEG is associated with at least one positioning reference signal;
the transmission phase error contained in the transmission PEG is within a second range, and the transmission phase error corresponds to the positioning reference signal;
wherein, the transmission phase error includes:
the uncalibrated phase error or the remaining phase error after calibration of a transmission radio frequency chain and/or the uncalibrated phase error or the remaining phase error calibration of a transmission antenna;
the uncalibrated phase center offset or the remaining phase center offset after calibration from the transmit APC to the physical antenna reference point (ARP).

In some embodiments, the reception-transmission PEG satisfies at least one of the following:
one reception-transmission PEG is associated with at least one phase measurement and at least one positioning reference signal;
the sum of the reception phase error and the transmission phase error contained in the reception-transmission PEG is within a third range, wherein the reception phase error corresponds to the phase measurement and the transmission phase error corresponds to the positioning reference signal.

In some embodiments, when the reception device is a terminal, the positioning reference signal is a downlink positioning reference signal (PRS) for positioning;
when the reception device is a network device, the positioning reference signal is an uplink sounding reference signal (SRS-Pos) for positioning.

It should be noted that this apparatus embodiment corresponds to the foregoing method embodiment one-to-one, and all implementation manners in the foregoing method embodiment are applicable to this apparatus embodiment and can also achieve the same technical effects.

It should be noted that the division of units in the embodiments of the present disclosure is schematic and only represents a logical function division; there may be other division manners in actual implementation. In addition, functional units in the embodiments of the present disclosure may be integrated into one processing unit, or each unit may exist physically independently, or two or more units may be integrated into one unit. The integrated unit may be implemented in the form of hardware or in the form of a software functional unit.

When the integrated unit is implemented in the form of a software functional unit and sold or used as an independent product, it may be stored in a processor-readable storage medium. Based on this understanding, the technical solution of the present disclosure essentially, or the part that contributes to the related art, or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The aforementioned storage medium includes various media that can store program codes, such as a USB flash drive, a removable hard disk, a Read-Only Memory (ROM), a Random Access Memory (RAM), a magnetic disk, or an optical disk.

An embodiment of the present disclosure further provides a core network node, whose structure is shown in FIG. 7, and details are not repeated herein.

The processor is configured to read the computer program in the memory and execute the following operations:
receiving first information from a reception device through the transceiver, wherein the first information is obtained by the reception device based on measuring a positioning reference signal from a transmission device by a first Phase Error Group (PEG) corresponding to the reception device;
the first information includes phase measurements and/or the difference between phase delays.

In some embodiments, the phase measurements include at least one of the following: phase measurements corresponding to different first PEGs respectively;
phase measurements corresponding to different second PEGs respectively, wherein the second PEG corresponds to the transmission device.

In some embodiments, the difference between phase delays includes at least one of the following:
the difference between phase delays of different first PEGs;
the difference between phase delays of different second PEGs, wherein the second PEG corresponds to the transmission device.

In some embodiments, when the first information includes phase measurements, processor is configured to read the computer program in the memory and further execute the following operations:
receiving a first association relationship from the reception device, wherein the first association relationship is used to indicate the correspondence between the first PEG and the phase measurements.

In some embodiments, the processor is configured to read the computer program in the memory and further execute the following operation:
sending first request information to the reception device, wherein the first request information is used to request the reception device to obtain the first information.

In some embodiments, the processor is configured to read the computer program in the memory and further execute the following operations:
receiving a second association relationship from the transmission device, wherein the second association relationship is used to indicate the correspondence between the identifier of the second PEG and the positioning reference signal;
sending the second association relationship to the reception device;
wherein the second PEG corresponds to the transmission device.

In some embodiments, the processor is configured to read the computer program in the memory and further execute the following operation:
sending second request information to the transmission device, wherein the second request information is used to request to obtain the correspondence between the identifier of the second PEG and the positioning reference signal.

In some embodiments, the processor is configured to read the computer program in the memory and further execute the following operations:
based on the first information, correcting the difference between phase delays of phase measurements corresponding to different first PEGs and/or different second PEGs;
performing terminal position calculation based on the corrected phase measurements.

In some embodiments, the first PEG includes at least one of the following: a reception PEG, a reception-transmission PEG.

In some embodiments, the reception PEG satisfies at least one of the following:
the reception PEG is associated with at least one phase measurement;
the reception phase error contained in the reception PEG is within a first range, and the reception phase error corresponds to the phase measurement;

wherein, the reception phase error includes:
the uncalibrated phase error or the remaining phase error after calibration of a reception radio frequency chain and/or the uncalibrated phase error or the remaining phase error after calibration of a reception antenna;
the uncalibrated phase center offset or the remaining phase center offset after calibration from the reception antenna Phase Center (APC) to the physical measurement reference point (MRP).

In some embodiments, the second PEG includes at least one of the following: a transmission PEG, a reception-transmission PEG.

In some embodiments, the transmission PEG satisfies at least one of the following:
the transmission PEG is associated with at least one positioning reference signal;
the transmission phase error contained in the transmission PEG is within a second range, and the transmission phase error corresponds to the positioning reference signal;

wherein, the transmission phase error includes:
the uncalibrated phase error or the remaining phase error after calibration of a transmission radio frequency chain and/or the uncalibrated phase error or the remaining phase error after calibration of a transmission antenna;
the uncalibrated phase center offset or the remaining phase center offset after calibration from the transmit APC to the physical antenna reference point (ARP).

In some embodiments, the reception-transmission PEG satisfies at least one of the following:
one reception-transmission PEG is associated with at least one phase measurement and at least one positioning reference signal;
the sum of the reception phase error and the transmission phase error contained in the reception-transmission PEG is within a third range, wherein the reception phase error corresponds to the phase measurement and the transmission phase error corresponds to the positioning reference signal.

In some embodiments, when the reception device is a terminal, the positioning reference signal is a downlink positioning reference signal (PRS) for positioning;
when the reception device is a network device, the positioning reference signal is an uplink sounding reference signal (SRS-Pos) for positioning.

It should be noted that the core network node provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a computer-readable storage medium, on which a computer program is stored. When the computer program is executed by a processor, the steps of the information transmission method applied to the core network node are implemented. The processor-readable storage medium may be any available medium or data storage device that can be accessed by a processor, including but not limited to magnetic memories (such as floppy disks, hard disks, magnetic tapes, magneto-optical disks (MO), etc.), optical memories (such as Compact Discs (CDs), Digital Versatile Discs (DVDs), Blu-ray Discs (BDs), High-Definition DVDs (HVDs), etc.), and semiconductor memories (such as Read-Only Memories (ROMs), Erasable Programmable ROMs (EPROMs), Electrically Erasable Programmable ROMs (EEPROMs), non-volatile memories (NAND FLASH), Solid-State Drives (SSDs), etc.).

As shown in FIG. 9, an embodiment of the present disclosure provides an information transmission apparatus 900, applied to a transmission device, including:
a second sending unit 901, configured to send a second association relationship to a core network node, wherein the second association relationship is used to indicate the correspondence between the identifier of a second Phase Error Group (PEG) and a positioning reference signal, and the second PEG corresponds to the transmission device.

In some embodiments, the apparatus further includes:
a fifth sending unit, configured to send the positioning reference signal to the reception device.

It should be noted that this apparatus embodiment corresponds to the foregoing method embodiment in a one-to-one manner, and all implementation manners in the foregoing method embodiment are applicable to this apparatus embodiment and can also achieve the same technical effects.

It should be noted that the division of units in the embodiments of the present disclosure is schematic and only represents a logical function division; there may be other division manners in actual implementation. In addition, functional units in the embodiments of the present disclosure may be integrated into one processing unit, or each unit may exist physically independently, or two or more units may be integrated into one unit. The integrated unit may be implemented in the form of hardware or in the form of a software functional unit.

When the integrated unit is implemented in the form of a software functional unit and sold or used as an independent product, it may be stored in a processor-readable storage medium. Based on this understanding, the technical solution of the present disclosure essentially, or the part that contributes to the related art, or all or part of the technical solution may be embodied in the form of a software product. The computer software product is stored in a storage medium and includes several instructions for enabling a computer device (which may be a personal computer, a server, a network device, etc.) or a processor to execute all or part of the steps of the method described in the embodiments of the present disclosure. The aforementioned storage medium includes various media that can store program codes, such as a USB flash drive, a removable hard disk, a Read-Only Memory (ROM), a Random Access Memory (RAM), a magnetic disk, or an optical disk.

An embodiment of the present disclosure further provides a transmission device, whose structure may refer to FIG. 6 or FIG. 7, and details are not repeated herein.

The processor is configured to read the computer program in the memory and execute the following operations:
sending a second association relationship to a core network node, wherein the second association relationship is used to indicate the correspondence between the identifier of a second Phase Error Group (PEG) and a positioning reference signal, and the second PEG corresponds to the transmission device.

In some embodiments, the processor is configured to read the computer program in the memory and further execute the following operation:
sending the positioning reference signal to the reception device through the transceiver.

It should be noted that the transmission device provided in the embodiments of the present disclosure can implement all the method steps implemented in the foregoing method embodiments and achieve the same technical effects. The same parts and beneficial effects as those in the method embodiments are not described in detail herein.

An embodiment of the present disclosure further provides a computer-readable storage medium, on which a computer program is stored. When the computer program is executed by a processor, the steps of the information transmission method applied to the transmission device are implemented. The processor-readable storage medium may be any available medium or data storage device that can be accessed by a processor, including but not limited to magnetic memories (such as floppy disks, hard disks, magnetic tapes, magneto-optical disks (MO), etc.), optical memories (such as Compact Discs (CDs), Digital Versatile Discs (DVDs), Blu-ray Discs (BDs), High-Definition DVDs (HVDs), etc.), and semiconductor memories (such as Read-Only Memories (ROMs), Erasable Programmable ROMs (EPROMs), Electrically Erasable Programmable ROMs (EEPROMs), non-volatile memories (NAND FLASH), Solid-State Drives (SSDs), etc.).

Those skilled in the art should understand that the embodiments of the present disclosure may be provided as a method, a system, or a computer program product. Therefore, the present disclosure may be in the form of an entirely hardware embodiment, an entirely software embodiment, or an embodiment combining software and hardware. Moreover, the present disclosure may be in the form of a computer program product implemented on one or more computer-readable storage media (including but not limited to disk memories, optical memories, etc.) containing computer-readable program codes.

The present disclosure is described with reference to flowcharts and/or block diagrams of methods, devices (systems), and computer program products according to the embodiments of the present disclosure. It should be understood that each flow and/or block in the flowcharts and/or block diagrams, and combinations of flows and/or blocks in the flowcharts and/or block diagrams, can be implemented by computer-executable instructions. These computer-executable instructions can be provided to the processor of a general-purpose computer, a special-purpose computer, an embedded processor, or other programmable data processing devices to generate a machine, so that the instructions executed by the processor of the computer or other programmable data processing devices generate a device for implementing the functions specified in one or more flows of the flowcharts and/or one or more blocks of the block diagrams.

These processor-executable instructions can also be stored in a processor-readable memory that can guide a computer or other programmable data processing devices to work in a specific manner, so that the instructions stored in the processor-readable memory generate an article of manufacture including an instruction device, which implements the functions specified in one or more flows of the flowcharts and/or one or more blocks of the block diagrams.

These processor-executable instructions can also be loaded onto a computer or other programmable data processing devices, so that a series of operation steps are executed on the computer or other programmable devices to generate computer-implemented processing. Thus, the instructions executed on the computer or other programmable devices provide steps for implementing the functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure fall within the scope of the claims of the present disclosure and their equivalent technologies, the present disclosure is also intended to include these modifications and variations.

## Claims

1. An information transmission method performed by a reception device comprising:
obtaining first information based on measuring a positioning reference signal from a transmission device by a first phase error group (PEG) corresponding to the reception device; and
sending the first information to a core network node;
wherein the first information comprises a phase measurement and/or a difference between phase delays.

2. The method according to claim 1, wherein when the first information comprises the phase measurement, obtaining the first information based on measuring the positioning reference signal from the transmission device by the first PEG corresponding to the reception device comprises at least one of the following:
obtaining, by using different first PEGs to measure positioning reference signals corresponding to a same second PEG from the transmission device, phase measurements respectively corresponding to the different first PEGs; and
obtaining, by using a same first PEG to measure positioning reference signals respectively corresponding to different second PEGs from the transmission device, phase measurements respectively corresponding to the different second PEGs;
wherein the second PEG corresponds to the transmission device.

3. The method according to claim 1 or 2, wherein when the first information comprises the difference between phase delays, obtaining the first information based on measuring the positioning reference signal from the transmission device by the first PEG corresponding to the reception device comprises at least one of the following:
obtaining, by using different first PEGs to measure positioning reference signals corresponding to a same second PEG from the transmission device, the difference between phase delays of the different first PEGs; and
obtaining, by using a same first PEG to measure positioning reference signals respectively corresponding to different second PEGs from the transmission device, the difference between phase delays of the different second PEGs;
wherein the second PEG corresponds to the transmission device.

4. The method according to claim 1 or 2, wherein when the first information comprises the phase measurement, the method further comprises:
reporting a first association relationship, wherein the first association relationship is used to indicate a correspondence between the first PEG and the phase measurement.

5. The method according to any one of claims 1 to 3, further comprising:
receiving first request information from a core network node, wherein the first request information is used to request the reception device to obtain the first information.

6. The method according to any one of claims 1 to 3, further comprising:
receiving a second association relationship from a core network node, wherein the second association relationship is used to indicate a correspondence between an identifier of a second PEG corresponding to the transmission device and a positioning reference signal.

7. The method according to any one of claims 1 to 6, wherein the first PEG and a first timing error group (TEG) are associated with a same phase measurement; and/or
the second PEG and a second TEG are associated with a same positioning reference signal;
the first TEG comprises at least one of the following: a reception TEG, a reception-transmission TEG; and the second TEG comprises at least one of the following: a transmission TEG, a reception-transmission TEG.

8. The method according to claim 1, 2, 3, 4 or 7, wherein the first PEG corresponding to the reception device comprises at least one of the following: a reception PEG, a reception-transmission PEG.

9. The method according to claim 8, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

10. The method according to claim 2, 3, 6 or 7, wherein the second PEG comprises at least one of the following: a transmission PEG, a reception-transmission PEG.

11. The method according to claim 10, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

12. The method according to claim 8 or 10, wherein the reception-transmission PEG satisfies at least one of the following:
one reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

13. The method according to claim 1, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

14. An information transmission method performed by a core network node, comprising:
receiving first information from a reception device, wherein the first information is obtained by the reception device based on measuring a positioning reference signal from a transmission device by a first phase error group (PEG) corresponding to the reception device;
wherein the first information comprises a phase measurement and/or a difference between phase delays.

15. The method according to claim 14, wherein the phase measurement comprises at least one of the following:
phase measurements respectively corresponding to different first PEGs;
phase measurements respectively corresponding to different second PEGs, wherein the second PEG corresponds to the transmission device.

16. The method according to claim 14 or 15, wherein the difference between phase delays comprises at least one of the following:
a difference between phase delays of different first PEGs;
a difference between phase delays of different second PEGs, wherein the second PEG corresponds to the transmission device.

17. The method according to claim 14 or 15, wherein when the first information comprises the phase measurement, the method further comprises:
receiving a first association relationship from the reception device, wherein the first association relationship is used to indicate a correspondence between the first PEG and the phase measurement.

18. The method according to any one of claims 14 to 16, further comprising:
sending first request information to the reception device, wherein the first request information is used to request the reception device to obtain the first information.

19. The method according to any one of claims 14 to 16, further comprising:
receiving a second association relationship from the transmission device, wherein the second association relationship is used to indicate a correspondence between an identifier of a second PEG and the positioning reference signal; and
sending the second association relationship to the reception device;
wherein the second PEG corresponds to the transmission device.

20. The method according to claim 19, further comprising:
sending second request information to the transmission device, wherein the second request information is used to request acquisition of the correspondence between the identifier of the second PEG and the positioning reference signal.

21. The method according to any one of claims 14 to 18, further comprising:
correcting, according to the first information, the difference between phase delays of phase measurements corresponding to different first PEGs and/or different second PEGs;
performing terminal position calculation based on the corrected phase measurement.

22. The method according to claim 15, 16, 17 or 21, wherein the first PEG comprises at least one of the following: a reception PEG, a reception-transmission PEG.

23. The method according to claim 22, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

24. The method according to claim 15, 16, 19, 20 or 21, wherein the second PEG comprises at least one of the following: a transmission PEG, a reception-transmission PEG.

25. The method according to claim 24, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

26. The method according to claim 22 or 24, wherein the reception-transmission PEG satisfies at least one of the following:
one reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

27. The method according to claim 14, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

28. An information transmission method performed by a transmission device, comprising:
sending a second association relationship to a core network node, wherein the second association relationship is used to indicate a correspondence between an identifier of a second phase error group (PEG) and a positioning reference signal, and the second PEG corresponds to the transmission device.

29. The method according to claim 28, further comprising:
sending the positioning reference signal to the reception device.

30. A reception device, comprising:
a memory, a transceiver, and a processor,
wherein the memory is configured to store a computer program; the transceiver is configured to send and receive data under the control of the processor; and the processor is configured to read the computer program in the memory and perform the following operations:
obtaining first information based on measuring a positioning reference signal from a transmission device by a first phase error group (PEG) corresponding to the reception device; and
sending the first information to a core network node through the transceiver;
wherein the first information comprises a phase measurement and/or a difference between phase delays.

31. The reception device according to claim 30, wherein when the first information comprises the phase measurement, the processor is configured to read the computer program in the memory and perform at least one of the following operations:
obtaining, by using different first PEGs to measure positioning reference signals corresponding to a same second PEG from the transmission device, phase measurements respectively corresponding to the different first PEGs; and
obtaining, by using a same first PEG to measure positioning reference signals respectively corresponding to different second PEGs from the transmission device, phase measurements respectively corresponding to the different second PEGs;
wherein the second PEG corresponds to the transmission device.

32. The reception device according to claim 30 or 31, wherein when the first information comprises the difference between phase delays, the processor is configured to read the computer program in the memory and perform at least one of the following operations:
obtaining, by using different first PEGs to measure positioning reference signals corresponding to a same second PEG from the transmission device, the difference between phase delays of the different first PEGs; and
obtaining, by using a same first PEG to measure positioning reference signals respectively corresponding to different second PEGs from the transmission device, the difference between phase delays of the different second PEGs;
wherein the second PEG corresponds to the transmission device.

33. The reception device according to claim 30 or 31, wherein when the first information comprises the phase measurement, the processor is configured to read the computer program in the memory and further perform the following operation:
reporting a first association relationship, wherein the first association relationship is used to indicate a correspondence between the first PEG and the phase measurement.

34. The reception device according to any one of claims 30 to 32, wherein the processor is configured to read the computer program in the memory and further perform the following operation:
receiving, by using the transceiver, first request information from a core network node, wherein the first request information is used to request the reception device to obtain the first information.

35. The reception device according to any one of claims 30 to 32, wherein the processor is configured to read the computer program in the memory and further perform the following operation:
receiving, by using the transceiver, a second association relationship from a core network node, wherein the second association relationship is used to indicate a correspondence between an identifier of a second PEG corresponding to the transmission device and a positioning reference signal.

36. The reception device according to any one of claims 30 to 35, wherein the first PEG and a first timing error group (TEG) are associated with a same phase measurement; and/or
the second PEG and a second TEG are associated with a same positioning reference signal;
wherein the first TEG comprises at least one of the following: a reception TEG, a reception-transmission TEG; and the second TEG comprises at least one of the following: a transmission TEG, a reception-transmission TEG.

37. The reception device according to claim 30, 31, 32, 33 or 36, wherein the first PEG corresponding to the reception device comprises at least one of the following: a reception PEG, a reception-transmission PEG.

38. The reception device according to claim 37, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

39. The reception device according to claim 31, 32, 35 or 36, wherein the second PEG comprises at least one of the following: a transmission PEG, a reception-transmission PEG.

40. The reception device according to claim 39, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

41. The reception device according to claim 37 or 39, wherein the reception-transmission PEG satisfies at least one of the following:
a reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

42. The reception device according to claim 30, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

43. A core network node, comprising:
a memory, a transceiver, and a processor,
wherein the memory is configured to store a computer program; the transceiver is configured to send and receive data under the control of the processor; and the processor is configured to read the computer program in the memory and perform the following operations:
receiving, by using the transceiver, first information from a reception device, wherein the first information is obtained by the reception device based on measuring a positioning reference signal from a transmission device by a first phase error group (PEG) corresponding to the reception device;
the first information comprises a phase measurement and/or a difference between phase delays.

44. The core network node according to claim 43, wherein the phase measurement comprises at least one of the following:
phase measurements respectively corresponding to different first PEGs;
phase measurements respectively corresponding to different second PEGs, wherein the second PEG corresponds to the transmission device.

45. The core network node according to claim 43 or 44, wherein the difference between phase delays comprises at least one of the following:
a difference between phase delays of different first PEGs;
a difference between phase delays of different second PEGs, wherein the second PEG corresponds to the transmission device.

46. The core network node according to claim 43 or 44, wherein when the first information comprises a phase measurement, the processor is configured to read the computer program in the memory and further perform the following operation:
receiving a first association relationship from the reception device, wherein the first association relationship is used to indicate a correspondence between the first PEG and the phase measurement.

47. The core network node according to any one of claims 43 to 45, wherein the processor is configured to read the computer program in the memory and further perform the following operation:
sending first request information to the reception device, wherein the first request information is used to request the reception device to obtain the first information.

48. The core network node according to any one of claims 43 to 45, wherein the processor is configured to read the computer program in the memory and further perform the following operations:
receiving a second association relationship from the transmission device, wherein the second association relationship is used to indicate a correspondence between an identifier of the second PEG and the positioning reference signal; and
sending the second association relationship to the reception device;
wherein the second PEG corresponds to the transmission device.

49. The core network node according to claim 48, wherein the processor is configured to read the computer program in the memory and further perform the following operation:
sending second request information to the transmission device, wherein the second request information is used to request acquisition of a correspondence between an identifier of the second PEG and the positioning reference signal.

50. The core network node according to any one of claims 43 to 47, wherein the processor is configured to read the computer program in the memory and further perform the following operations:
correcting, according to the first information, the difference between phase delays of phase measurements corresponding to different first PEGs and/or different second PEGs;
performing terminal position calculation based on the corrected phase measurement.

51. The core network node according to claim 44, 45, 46 or 50, wherein the first PEG comprises at least one of the following: a reception PEG, a reception-transmission PEG.

52. The core network node according to claim 51, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

53. The core network node according to claim 44, 45, 48, 49 or 50, wherein the second PEG comprises at least one of the following: a transmission PEG, a reception-transmission PEG.

54. The core network node according to claim 53, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

55. The core network node according to claim 51 or 53, wherein the reception-transmission PEG satisfies at least one of the following:
a reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

56. The core network node according to claim 53, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

57. A transmission device, comprising:
a memory, a transceiver, and a processor,
wherein the memory is configured to store a computer program; the transceiver is configured to send and receive data under the control of the processor; and the processor is configured to read the computer program in the memory and perform the following operation:
sending a second association relationship to a core network node, wherein the second association relationship is used to indicate a correspondence between an identifier of a second phase error group (PEG) and a positioning reference signal, and the second PEG corresponds to the transmission device.

58. The transmission device according to claim 57, wherein the processor is configured to read the computer program in the memory and further perform the following operation:
sending the positioning reference signal to the reception device through the transceiver.

59. An information transmission apparatus, applied to a reception device, comprises:
a first obtaining unit, configured to obtain first information through measuring a positioning reference signal from a transmission device according to a first phase error group (PEG) corresponding to the reception device; and
a first sending unit, configured to send the first information to a core network node;
wherein the first information comprises a phase measurement and/or a difference between phase delays.

60. The apparatus according to claim 59, wherein when the first information comprises the phase measurement, the first obtaining unit is configured to implement at least one of the following:
obtaining, by using different first PEGs to measure positioning reference signals corresponding to a same second PEG from the transmission device, phase measurements respectively corresponding to the different first PEGs; and
obtaining, by using a same first PEG to measure positioning reference signals respectively corresponding to different second PEGs from the transmission device, phase measurements respectively corresponding to the different second PEGs;
wherein the second PEG corresponds to the transmission device.

61. The apparatus according to claim 59 or 60, wherein when the first information comprises the difference between phase delays, the first obtaining unit is configured to implement at least one of the following:
obtaining, by using different first PEGs to measure positioning reference signals corresponding to a same second PEG from the transmission device, the difference between phase delays of the different first PEGs; and
obtaining, by using a same first PEG to measure positioning reference signals respectively corresponding to different second PEGs from the transmission device, the difference between phase delays of the different second PEGs;
wherein the second PEG corresponds to the transmission device.

62. The apparatus according to claim 59 or 60, wherein when the first information comprises the phase measurement, the apparatus further comprises:
a reporting unit, configured to report a first association relationship, wherein the first association relationship is used to indicate a correspondence between the first PEG and the phase measurement.

63. The apparatus according to any one of claims 59 to 61, further comprising:
a second receiving unit, configured to receive first request information from a core network node, wherein the first request information is used to request the reception device to obtain the first information.

64. The apparatus according to any one of claims 59 to 61, further comprising:
a third receiving unit, configured to receive a second association relationship from a core network node, wherein the second association relationship is used to indicate a correspondence between an identifier of a second PEG corresponding to the transmission device and a positioning reference signal.

65. The apparatus according to any one of claims 59 to 64, wherein the first PEG and a first timing error group (TEG) are associated with a same phase measurement; and/or
the second PEG and a second TEG are associated with a same positioning reference signal;
wherein the first TEG comprises at least one of the following: a reception TEG, a reception-transmission TEG; and the second TEG comprises at least one of the following: a transmission TEG, a reception-transmission TEG.

66. The apparatus according to claim 59, 60, 61, 62 or 65, wherein the first PEG corresponding to the reception device comprises at least one of the following: a reception PEG, a reception-transmission PEG.

67. The apparatus according to claim 66, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

68. The apparatus according to claim 60, 61, 64 or 65, wherein the second PEG comprises at least one of the following: a transmission PEG, a reception-transmission PEG.

69. The apparatus according to claim 68, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

70. The apparatus according to claim 66 or 68, wherein the reception-transmission PEG satisfies at least one of the following:
a reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

71. The apparatus according to claim 59, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

72. An information transmission apparatus applied to a core network node, comprising:
a first receiving unit, configured to receive first information from a reception device, wherein the first information is obtained by the reception device based on measuring a positioning reference signal from a transmission device by a first phase error group (PEG) corresponding to the reception device;
wherein the first information comprises a phase measurement and/or a difference between phase delays.

73. The apparatus according to claim 72, wherein the phase measurement comprises at least one of the following:
phase measurements respectively corresponding to different first PEGs;
phase measurements respectively corresponding to different second PEGs, wherein the second PEG corresponds to the transmission device.

74. The apparatus according to claim 72 or 73, wherein the difference between phase delays comprises at least one of the following:
a difference between phase delays of different first PEGs;
a difference between phase delays of different second PEGs, wherein the second PEG corresponds to the transmission device.

75. The apparatus according to claim 72 or 73, wherein when the first information comprises the phase measurement, the apparatus is further configured to:
receive a first association relationship from the reception device, wherein the first association relationship is used to indicate a correspondence between the first PEG and the phase measurement.

76. The apparatus according to any one of claims 72 to 74, further comprising:
a third sending unit, configured to send first request information to the reception device, wherein the first request information is used to request the reception device to obtain the first information.

77. The apparatus according to any one of claims 72 to 74, further comprising:
a fourth receiving unit, configured to receive a second association relationship from the transmission device, wherein the second association relationship is used to indicate a correspondence between an identifier of the second PEG and the positioning reference signal; and send the second association relationship to the reception device;
wherein the second PEG corresponds to the transmission device.

78. The apparatus according to claim 77, further comprising:
a fourth sending unit, configured to send second request information to the transmission device, wherein the second request information is used to request to obtain the correspondence between the identifier of the second PEG and the positioning reference signal.

79. The apparatus according to any one of claims 72 to 76, further comprising:
a correction unit, configured to correct the difference between phase delays of phase measurements corresponding to different first PEGs and/or different second PEGs according to the first information;
a calculation unit, configured to perform terminal position calculation based on the corrected phase measurement.

80. The apparatus according to claim 73, 74, 75 or 79, wherein the first PEG comprises at least one of the following: a reception PEG, a reception-transmission PEG.

81. The apparatus according to claim 80, wherein the reception PEG satisfies at least one of the following:
the reception PEG is associated with at least one phase measurement;
a reception phase error contained in the reception PEG is within a first range, and the reception phase error corresponds to a phase measurement;
wherein the reception phase error comprises:
an uncalibrated phase error or a remaining phase error after calibration of a reception radio frequency chain and/or an uncalibrated phase error or a remaining phase error after calibration of a reception antenna;
an uncalibrated phase center offset or a remaining phase center offset after calibration from a reception antenna Phase Center (APC) to a physical measurement reference point (MRP).

82. The apparatus according to claim 73, 74, 77, 78 or 79, wherein the second PEG comprises at least one of the following: a transmission PEG, a reception-transmission PEG.

83. The apparatus according to claim 82, wherein the transmission PEG satisfies at least one of the following:
the transmission PEG is associated with at least one positioning reference signal;
a transmission phase error contained in the transmission PEG is within a second range, and the transmission phase error corresponds to a positioning reference signal;
wherein the transmission phase error comprises:
an uncalibrated phase error or a remaining phase error after calibration of a transmission radio frequency chain and/or an uncalibrated phase error or a remaining phase error after calibration of a transmission antenna;
an uncalibrated phase center offset or a remaining phase center offset after calibration from a transmit APC to a physical antenna reference point (ARP).

84. The apparatus according to claim 80 or 82, wherein the reception-transmission PEG satisfies at least one of the following:
a reception-transmission PEG is associated with at least one phase measurement and at least one positioning reference signal;
a sum of a reception phase error and a transmission phase error contained in the reception-transmission PEG is within a third range, wherein the reception phase error corresponds to the phase measurement, and the transmission phase error corresponds to the positioning reference signal.

85. The apparatus according to claim 72, wherein when the reception device is a terminal, the positioning reference signal is a downlink positioning reference signal (PRS) for positioning;
when the reception device is a network device, the positioning reference signal is an uplink sounding reference signal for positioning (SRS-Pos).

86. An information transmission apparatus applied to a transmission device, comprising:
a second sending unit, configured to send a second association relationship to a core network node, wherein the second association relationship is used to indicate a correspondence between a identifier of a second phase error group (PEG) and a positioning reference signal, and the second PEG corresponds to the transmission device.

87. The apparatus according to claim 86, further comprising:
a fifth sending unit, configured to send the positioning reference signal to the reception device.

88. A processor-readable storage medium, wherein the processor-readable storage medium stores a computer program, and the computer program is configured to cause the processor to execute the method according to any one of claims 1 to 29.
